(19) Europäisches Patentamt
European Patent Office
Office européen des brevets

(11) **EP 3 503 618 B1**

(12) **FASCICULE DE BREVET EUROPEEN**

(45) Date de publication et mention de la délivrance du brevet:
**25.11.2020 Bulletin 2020/48**

(51) Int Cl.:
**H04W 28/10** *(2009.01)*       **H04L 12/801** *(2013.01)*
**H04W 88/06** *(2009.01)*       **H04L 12/825** *(2013.01)*

(21) Numéro de dépôt: **18214180.4**

(22) Date de dépôt: **19.12.2018**

(54) **PROCÉDÉ DE RÉGULATION DE DÉBIT**

DURCHSATZREGULIERUNGSVERFAHREN

FLOW CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1762915**

(43) Date de publication de la demande:
**26.06.2019 Bulletin 2019/26**

(73) Titulaire: **Aviwest**
**35769 SAINT GREGOIRE Cedex 9 (FR)**

(72) Inventeurs:
• **OMNES, Yannick**
  **35769 Saint-Gregoire Cedex 9 (FR)**
• **ZAKARI, Hamid**
  **35769 Saint-Gregoire Cedex 9 (FR)**
• **POULLAOUEC, Ronan**
  **35769 Saint-Gregoire Cedex 9 (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2003 026 207**

• **MATSUFUJI RYOTA ET AL: "Multipath TCP path schedulers for streaming video", 2017 IEEE PACIFIC RIM CONFERENCE ON COMMUNICATIONS, COMPUTERS AND SIGNAL PROCESSING (PACRIM), IEEE, 21 août 2017 (2017-08-21), pages 1-6, XP033272965, DOI: 10.1109/PACRIM.2017.8121920**

**Description**

La présente invention concerne un procédé de régulation de débit entre un émetteur et un récepteur reliés par une pluralité de liens réseau lors d'une transmission de données audio/vidéo, un dispositif et un système mettant en œuvre le procédé.

Depuis quelques années, on assiste à une multiplication des applications utilisant des transmissions de données audio/vidéo sur réseau sans fil. Aux classiques transmissions de programmes télévisuels sur des dispositifs fixes tels que des téléviseurs, s'ajoutent des applications de transmission audio/vidéo à partir ou entre des dispositifs mobiles tels que des téléphones intelligents (« smartphone » en terminologie anglo-saxonne), des tablettes, et des drones.

Il est courant que les dispositifs mobiles soient adaptés pour utiliser plusieurs types de réseau sans fil. Par exemple, un téléphone intelligent est adapté pour utiliser un réseau de téléphonie mobile (tel qu'un réseau GSM (Système global pour communications mobiles : « Global System for Mobile communications » en terminologie anglo-saxonne) aussi appelé réseau 2G, un réseau UMTS (système de télécommunication mobile universel : « Universal Mobile Communication System » en terminologie anglo-saxonne), aussi appelé réseau 3G, un réseau LTE-advanced (Evolution à long terme avancée : « Long Term Evolution Advanced » en terminologie anglo-saxonne), aussi appelé réseau 4G, ou un réseau LTE-advanced pro appelé aussi réseau 5G, etc) et un réseau domestique (tel que par exemple un réseau IEEE 802.11 (ISO/CEI 8802-11) aussi appelé réseau Wi-Fi ou un réseau bluetooth). Ces dispositifs mobiles n'utilisent généralement qu'un de ces réseaux sans fil à la fois, en général, le réseau offrant les meilleurs performances de transmission.

Une transmission de données audio/vidéo sur un lien réseau sans fil fait en général appel à une méthode de régulation de débit permettant d'estimer les performances en termes de bande passante et de latence dudit lien. En effet, un dispositif n'a a priori aucune idée des performances d'un lien réseau sans fil. Le dispositif doit par lui-même découvrir quelles sont ces performances afin de transmettre des données avec un débit en adéquation avec ces performances. La littérature est foisonnante sur les méthodes de régulation de débit pour la transmission de données audio/vidéo sur un lien réseau. On recherche généralement pour ces méthodes des propriétés de réactivité permettant d'adapter le plus rapidement possible une transmission audio/vidéo aux variations des performances dudit lien.

Toutefois, avec l'augmentation des quantités de données à transmettre sur les réseaux sans fil, due par exemple à l'augmentation des résolutions des images audio/vidéo ou à la nécessité de transmettre des données de contrôle dans le cas d'un drone, l'utilisation d'un lien réseau sans fil unique s'avère insuffisante. C'est pourquoi, certains dispositifs mobiles sont adaptés pour communiquer sur plusieurs liens réseau sans fil en parallèle (par exemple plusieurs liens 4G, plusieurs liens 5G, une combinaison de liens 4G, 5G et de Wi-Fi, etc) afin d'augmenter le débit disponible.

Cependant, communiquer en parallèle sur plusieurs liens réseau complexifie grandement le problème de régulation de débit. En effet, les méthodes de régulation de débit classiques ne sont pas immédiatement transposables au cas multi-liens. Ces méthodes, bien que performantes pour réguler un débit sur un lien donné, ne répondent pas à la question de la répartition des données sur plusieurs liens ayant des performances variant indépendamment.

Il est souhaitable de pallier ces inconvénients de l'état de la technique. Il est notamment souhaitable de trouver une méthode de régulation de débit qui soit adaptée au contexte des transmissions sur une pluralité de liens réseau en parallèle. Il est de plus souhaitable que cette méthode soit simple à mettre en œuvre et ait un faible coût calculatoire

Un procédé de régulation de débit tel qu'énoncé dans le préambule de la revendication 1 est déjà connu du document "Multipath TCP path schedulers for streaming video", de MATSUFUJI RYOTA ET AL, publié le 21 août 2017 dans IEEE PACIFIC RIM CONFERENCE ON COMMUNICATIONS, COMPUTERS AND SIGNAL PROCESSING (PACRIM)

Selon un premier aspect de la présente invention, la présente invention concerne un procédé de régulation de débit lors d'une transmission de données audio/vidéo sur un lien réseau entre un émetteur et un récepteur, ledit procédé étant mis en œuvre lors de réceptions par l'émetteur d'informations représentatives de la transmission transmises par le récepteur. Le procédé est mis en œuvre par l'émetteur et comprend :

une pluralité de modes de régulation de débit comprenant un premier mode de régulation de débit, exécuté au démarrage de la transmission, dans lequel la seule modification possible du débit de transmission par l'émetteur est une augmentation, chaque valeur d'augmentation de débit étant déterminée en ne prenant en compte aucune information représentative de la transmission, et au moins un second mode de régulation mis en œuvre à la suite du premier mode, dans lequel au moins une des informations représentatives de la transmission est utilisée pour augmenter ou diminuer le débit de transmission, un passage du premier mode vers un second mode se faisant lorsqu'une des informations représentatives de la transmission indique que le débit de transmission a atteint un débit maximum disponible sur le lien réseau ; ledit débit de transmission étant partagé entre un budget de débit de données utiles comprenant les données audio/vidéo, dit budget utile, et un budget de débit de données secondaires, dit budget secondaire, non nécessaires au décodage des données audio/vidéo, seul le budget secondaire est augmenté lors d'une augmentation du débit de transmission, le budget utile n'étant augmenté que lorsqu'aucune information représentative de la transmission reçue suite à une augmentation du budget secondaire n'indique une augmentation d'un risque de pertes de données.

L'utilisation d'un mode de régulation de débit très agressif au démarrage permet d'atteindre plus rapidement un débit disponible sur le lien réseau. L'utilisation de mode de régulation de débit plus doux par la suite permet de poursuivre la régulation de débit tout en limitant les risques de pertes de données. Par ailleurs, utiliser des données secondaires pour sonder le débit disponible sur le réseau permet de limiter un impact qu'auraient des pertes de données sur les données audio/vidéo.

Selon un mode de réalisation, dans le premier mode, lorsqu'au moins une des informations représentatives de la transmission indique qu'une augmentation d'un budget utile est possible, le procédé comprend : augmenter le budget utile d'un deuxième pourcentage prédéfini du budget secondaire lorsqu'un débit de transmission par l'émetteur des données secondaires est inférieur à un premier pourcentage prédéfini du débit de transmission par l'émetteur des données utiles et diminuer le budget secondaire de la valeur de l'augmentation du budget utile ; augmenter le budget utile en fixant la valeur du budget utile à la somme du budget secondaire et d'une valeur représentative du débit de réception par le récepteur des données utiles et secondaires transmises par l'émetteur.

Selon un mode de réalisation, dans le premier mode, lorsqu'au moins une des informations représentatives de la transmission indique qu'une augmentation d'un budget secondaire doit être appliquée, le procédé comprend : augmenter le budget secondaire d'une première valeur d'augmentation prédéfinie.

Selon un mode de réalisation, dans un deuxième mode, lorsqu'au moins une des informations représentatives de la transmission indique qu'une augmentation du budget utile est possible, le procédé comprend : lorsqu'une des informations représentatives de la transmission indique qu'un débit de réception du récepteur atteint un troisième pourcentage prédéfini du maximum de débit disponible sur le réseau, allouer respectivement au budget utile et au budget secondaire un quatrième et un cinquième pourcentages prédéfinis du débit de réception, une somme du budget utile et du budget secondaire étant égale audit débit de réception, le budget utile étant supérieur au budget secondaire ; lorsqu'une des informations représentatives de la transmission indique que ledit débit de réception est inférieur au troisième pourcentage prédéfini du maximum de débit disponible sur le réseau, mettre le budget secondaire à zéro, allouer au budget utile un sixième pourcentage prédéfini dudit maximum et diminuer ledit maximum d'un septième pourcentage prédéfini.

Selon un mode de réalisation, dans un deuxième mode, lorsqu'au moins une des informations représentatives de la transmission indique qu'une augmentation du budget secondaire doit être appliquée, le procédé comprend : calculer une valeur d'augmentation en multipliant une deuxième valeur d'augmentation prédéfinie inférieure à la première valeur d'augmentation prédéfinie par un coefficient compris entre zéro et l'unité, ledit coefficient étant calculé à partir d'une information représentative d'une fenêtre de congestion et d'informations dépendantes du temps d'aller observées par le récepteur et transmises dans les informations représentatives de la transmission à l'émetteur ; et ; augmenter le budget utile de la valeur d'augmentation calculée.

Selon un mode de réalisation, lorsqu'au moins une des informations représentatives de la transmission indique qu'aucune augmentation du débit de transmission n'est possible, le procédé comprend : appliquer une procédure de vérification du taux de pertes de paquets et réduire le débit de transmission si le taux de pertes est supérieur à un seuil de pertes prédéfini; si le taux de pertes est inférieur au seuil de pertes prédéfini, appliquer une procédure de vérification du délai d'aller et réduire le débit de transmission lorsqu'un écart entre le délai d'aller et une valeur de délai d'aller de référence est supérieur à un écart prédéfini.

Selon un deuxième aspect de l'invention, l'invention concerne un procédé de régulation de débit entre un émetteur et un récepteur reliés par une pluralité de liens réseau lors d'une transmission de données audio/vidéo. Le procédé comprend : former une liste de liens ordonnés ; parcourir les liens selon l'ordre de la liste ; pour chaque lien : définir un budget de données à transmettre par ledit lien, dit lien courant, en utilisant des informations fournies pour le lien courant par le procédé de régulation de débit selon le premier aspect; et, transmettre une quantité de données correspondant audit budget ; passer au lien suivant lorsque la quantité de données correspondant audit budget a été transmise en reprenant la liste au début lorsque tous les liens de la liste ont été parcourus.

Ainsi, on utilise plusieurs liens en parallèle, chaque lien étant utilisé en fonction de ses capacités.

Selon un mode de réalisation, la liste est ordonnée suivant une métrique de performance calculée pour chaque lien de la pluralité de liens, pour un lien, ladite métrique étant une fonction croissante du budget de données à transmettre par ledit lien, une fonction décroissante d'une information représentative d'un taux de pertes de paquets sur ledit lien, et une fonction croissante d'une différence entre une taille de fenêtre de congestion des liens et d'une information représentative d'un temps d'aller mesuré pour ledit lien.

Selon un mode de réalisation, la métrique de performance pour un lien réseau $i$ de la pluralité de liens se calcule de la manière suivante :

$$Q_i = \frac{(B\_data_i + B\_sec_i)^2}{(P_c^i)^2 \times TD} \times \left(\frac{timewindow}{3} - owd_i\right)$$

où $B_{data_i}$ est le budget utile pour le lien réseau $i$, $B_{sec_i}$ est le budget secondaire pour le lien réseau $i$, la somme dudit budget utile et dudit budget secondaire étant le budget de données à transmettre par le lien réseau $i$, $P_c^i$ est une information représentative d'un taux de pertes de paquets pour le lien réseau $i$, $TD$ est une somme de budget secondaire pour tous les liens réseau de ladite pluralité, et $owd_i$ est l'information représentative d'un délai d'aller mesuré pour le lien réseau $i$. Timewindow est une latence que le système constitué du drone 1 et du système de commande 3 doit respecter. En d'autres termes, il doit s'écouler un délai de *timewindow* entre le moment où un paquet de données entre dans le système *(i.e.* par exemple le moment où le paquet est généré par le drone 1) et le moment où il en sort *(i.e.* par exemple, le moment où le paquet est consommé par le système de commande 3). On note qu'un mécanisme de synchronisation d'horloge est mis en œuvre entre le drone 1 et le système de commande 3 pour que la latence puisse être contrôlée efficacement. *Timewindow* est une valeur prédéfinie fixée par un utilisateur du système constitué du drone 1 et du système de commande 3. Par exemple, lorsqu'un utilisateur souhaite réaliser un duplex, il choisit une valeur de *Timewindow* faible (par exemple 100 millisecondes). Par contre, si l'utilisateur souhaite implémenter une transmission de données audio/vidéo en sens unique sans contrainte de temps sur l'affichage desdites données, il choisit une valeur de *timewindow* élevée (par exemple 400 millisecondes).

Selon un mode de réalisation, lorsque l'émetteur se retrouve sans données à transmettre après une transmission d'un paquet, le prochain lien utilisé pour transmettre un paquet est le premier de la liste, la liste étant ensuite parcourue en repartant du premier lien de la liste.

Ainsi, on privilégie les liens réseau les plus performants.

Selon un troisième aspect de l'invention, l'invention concerne un dispositif de régulation de débit lors d'une transmission de données audio/vidéo sur un lien réseau entre un émetteur et un récepteur, le dispositif comprenant des moyens adaptés pour mettre en œuvre le procédé selon le premier aspect.

Selon un quatrième aspect de l'invention, l'invention concerne un dispositif de régulation de débit entre un émetteur et un récepteur reliés par une pluralité de liens réseau lors d'une transmission de données audio/vidéo, comprenant des moyens adaptés pour mettre en œuvre le procédé selon le deuxième aspect.

Selon un cinquième aspect de l'invention, l'invention concerne un système de transmission de données audio/vidéo comprenant un émetteur comprenant un dispositif selon le troisième ou le quatrième aspect et un récepteur, l'émetteur et le récepteur étant reliés par au moins un lien réseau.

Selon un sixième aspect, l'invention concerne un programme d'ordinateur, comprenant des instructions pour mettre en œuvre, par un dispositif, le procédé selon le premier aspect ou le procédé selon le deuxième aspect, lorsque ledit programme est exécuté par un processeur dudit dispositif.

Selon un septième aspect, l'invention concerne des moyens de stockage stockant un programme d'ordinateur comprenant des instructions pour mettre en œuvre, par un dispositif, le procédé selon le premier aspect ou le procédé selon le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de système de transmission audio/vidéo utilisant une pluralité de liens réseau;
- la Fig. 2 illustre schématiquement un exemple de drone utilisé dans le système de transmission audio/vidéo;
- la Fig. 3 illustre schématiquement un exemple de système de commande utilisé dans le système audio/vidéo ;
- la Fig. 4A illustre schématiquement un exemple d'architecture matérielle d'un module de traitement d'un émetteur selon l'invention ;
- la Fig. 4B illustre schématiquement un exemple d'architecture matérielle d'un module de traitement d'un récepteur selon l'invention ;
- la Fig. 5 illustre schématiquement un procédé de régulation de débit global selon l'invention permettant une répartition de données sur une pluralité de liens réseau;
- la Fig. 6 illustre schématiquement une pluralité de modes de régulation de débit utilisés dans un procédé de régulation de débit de lien;
- la Fig. 7 illustre schématiquement un procédé de régulation de débit de lien selon l'invention;
- la Fig. 8 illustre schématiquement un premier détail du procédé de régulation de débit d'un lien réseau selon l'invention;
- la Fig. 9 illustre schématiquement un deuxième détail du procédé de régulation de débit d'un lien réseau selon l'invention;
- la Fig. 10 illustre schématiquement un troisième détail du procédé de régulation de débit d'un lien réseau selon l'invention;

- la Fig. 11 illustre schématiquement un quatrième détail du procédé de régulation de débit d'un lien réseau selon l'invention ; et,
- la Fig. 12 décrit un détail d'une étape du procédé de la Fig. 9.

Par la suite l'invention est décrite dans un contexte de système de drone dans lequel un opérateur contrôle un drone à partir d'un système de commande et le drone est adapté pour acquérir des données audio/vidéo et à les transmettre au système de commande sur lequel celles-ci sont affichées. Dans ce système, les communications sont bidirectionnelles puisque au moins des données audio/vidéo sont transmises du drone vers le système de commande et au moins des données de contrôle sont transmises du système de commande vers le drone. Par ailleurs, ces communications utilisent de multiples liens réseau sans fil.

L'invention est toutefois adaptée à d'autres contextes, notamment au cas d'un système comprenant deux dispositifs mobiles jouant alternativement un rôle d'émetteur et de récepteur, chaque dispositif mobile étant apte à acquérir des données audio/vidéo et à les transmettre à l'autre dispositif en utilisant une pluralité de liens réseau en parallèle. Dans ce cas, les deux dispositifs mobiles pourraient par exemple être des téléphones intelligents.

Par ailleurs, l'invention est adaptée à des systèmes où seules des données audio ou seules des données vidéo sont échangées. Dans ce cas, bien qu'on parle par la suite de données audio/vidéo celles-ci pourraient ne contenir que des données audio ou que des données vidéo.

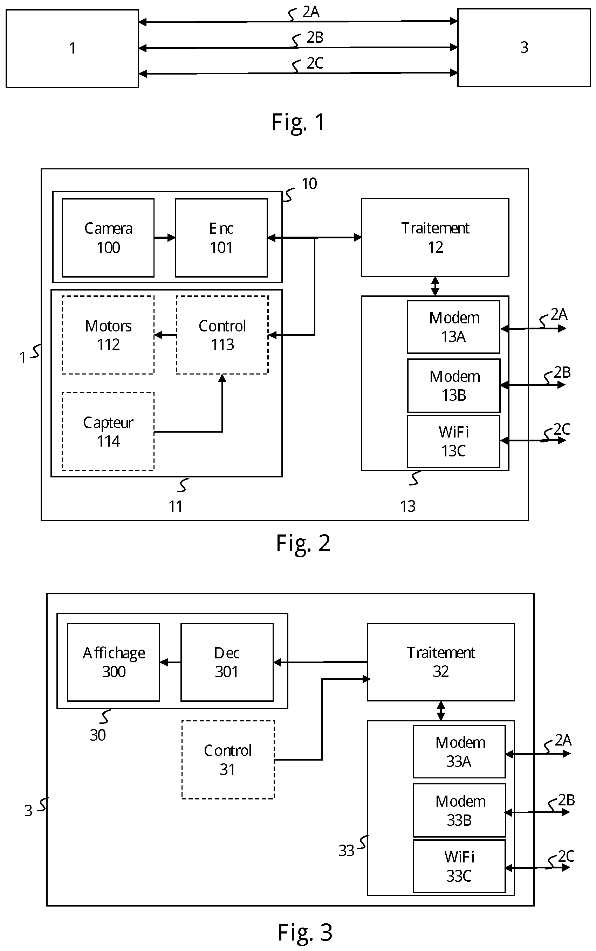

La **Fig. 1** illustre schématiquement un exemple de système de transmission audio/vidéo utilisant une pluralité de liens réseau.

Ce système comprend un système 1 et un système 3 reliés par une pluralité de liens réseau 2A, 2B et 2C. Le système 3 est un système de commande permettant à un opérateur de contrôler le système 1 qui est un drone.

La pluralité de liens réseau 2A, 2B et 2C comprend au moins un lien 4G ou 5G, au moins un lien Wi-Fi et, dans certains modes de réalisation, au moins un lien satellite. De cette manière, le système 1 et le système 3 peuvent communiquer à courte distance en utilisant un lien Wi-Fi et, au-delà de la portée du lien Wi-Fi, en utilisant un lien 4G ou 5G.

La **Fig. 2** illustre schématiquement un exemple de drone utilisé dans le système de transmission audio/vidéo.

Le drone 1 comprend un module de contrôle 11, un module d'acquisition 10, un module de traitement 12 et un module réseau 13.

Le module d'acquisition 10 comprend une caméra 100 adaptée pour acquérir des images dans l'environnement du drone 1. La caméra 100 fournit les images acquises à un encodeur audio/vidéo 101, qui compresse les images vidéo dans un format tel que le format AVC (codage vidéo avancé : « advanced Video Coding » en terminologie anglo-saxonne (UIT-T H.264 - ISO/CEI MPEG-4 Part 10 (ISO/CEI 14496-10)) ou le format HEVC (Codage Vidéo hautement efficace, « High Efficiency Video Coding » en terminologie anglo-saxonne (UIT-T H.265 - ISO/CEI 23008-2)). La caméra 100 comprend de plus un capteur audio, qui capture des données audio et les fournit à l'encodeur audio/vidéo 101 qui les compresse par exemple au format AAC (« Avanced Audio Coding » en terminologie anglo-saxonne). Les données audio/vidéo compressées sont ensuite insérées dans un flux de transport par l'encodeur audio/vidéo 101 tel que par exemple un flux MPEG-TS (Moving Picture Expert Group - Transport Stream). L'encodeur audio/vidéo 101 encapsule le flux de transport dans des paquets tels que des paquets RTP (Protocole de transport temps réel, « Real-Time Transport Protocol » en terminologie anglo-saxonne, RFC 3550), les données audio et les données vidéo étant encapsulées dans des paquets différents. On obtient alors un flux audio/vidéo encapsulé dans des paquets en sortie du module de contrôle et d'acquisition 10.

Lorsque le système 1 est un drone, celui-ci comprend un module de contrôle 11, comprenant des moteurs 112, un contrôleur de déplacement 113 et au moins un capteur 114, tel qu'un gyroscope. Le contrôleur de déplacement 113 reçoit des signaux de commande en provenance du système de commande 3, et des informations de la part de chaque capteur 114 et agit sur les moteurs 112 afin de déplacer le drone 1 en prenant en compte ces signaux de commande et informations. Lorsque le contrôleur de déplacement 113 ne reçoit aucun signal de commande, en cas de coupure réseau par exemple, il agit sur les moteurs 112 afin de stabiliser le drone dans une position actuelle en attendant de nouveaux signaux de commande.

Le module réseau 13 comprend un module de communication 13A, 13B et 13C correspondant respectivement aux liens réseau 2A, 2B et 2C. Le module de communication 13A est par exemple un premier module 5G. Le module de communication 13B est par exemple un deuxième module 5G. Le module de communication 13C est par exemple un module Wi-Fi.

Le module de traitement 12 est un élément central du drone 1. En effet, le module de traitement 12 reçoit des informations statistiques sur l'état de chaque lien réseau 2A, 2B et 2C, dites informations représentatives de la transmission, en provenance du module réseau 13 et les utilise pour mettre en œuvre un procédé de régulation de débit selon l'invention. Les informations représentatives de la transmission comprennent notamment pour chaque lien réseau, un temps d'aller OWD (« one way delay » en terminologie anglo-saxonne), une information représentative d'un dernier paquet acquitté, une information représentative d'un taux de pertes sur le lien, et une information représentative d'un nombre total d'octets reçus. Le module de traitement 12 détermine notamment une contrainte de débit à allouer à l'encodeur audio/vidéo 101. Par ailleurs, le module de traitement 12 reçoit les paquets de données audio/vidéo produits par l'encodeur audio/vidéo 101 et se charge de répartir ces paquets sur les modules de communication 13A, 13B et 13C en prenant en compte des résultats du procédé de régulation de débit. Le module de traitement 12 reçoit aussi des paquets comprenant des signaux de commandes en provenance du système de commande 3, extrait ces signaux de commande des paquets et transmet les signaux de commande au module de contrôle 11.

Dans un mode de réalisation, le module réseau 13 comprend plus de trois modules de communication.

Dans un mode de réalisation, le module de traitement 12 implémente un module de contrôle d'erreurs par anticipation (« Forward Error Control (FEC) » en terminologie anglo-saxonne) non représenté. Le module de contrôle d'erreurs par anticipation traite chaque type de données indépendamment. Le module de contrôle d'erreurs par anticipation calcule des données redondantes, par exemple sous forme de code correcteur d'erreur, indépendamment pour les données vidéo, pour les données audio et pour toutes autres données transitant entre le drone 1 et le système de commande 3. Ces données redondantes sont transmises sous forme de paquets et peuvent être utilisées par le système de contrôle 3 pour réparer des paquets de données utiles perdus lors de la transmission.

Dans un mode de réalisation, le module de traitement 12 implémente un module de retransmission de paquets perdus. Le module de retransmission de paquets perdus gère chaque type de données indépendamment. Lorsque les statistiques reçues du système de commande 3 indiquent qu'un ou plusieurs paquets ont été perdus, le module de retransmission retransmet les paquets perdus au moins une fois.

Dans un mode de réalisation, le module de traitement 12 implémente un module de contrôle d'erreurs par anticipation et un module de retransmission. Cependant, ces modules ne sont pas activés en même temps. Le module de retransmission d'un module de communication est activé lorsqu'une latence moyenne entre le drone 2 et le système de commande 3 est inférieure à un seuil prédéterminé. Dans ce cas, le module de contrôle d'erreurs par anticipation est désactivé. Lorsque la latence moyenne dépasse ledit seuil prédéterminé, le module de contrôle d'erreurs par anticipation est activé et le module de retransmission est désactivé. Le seuil prédéterminé est par exemple égal à «100ms» de latence.

Dans un mode de réalisation, le module de traitement 12 utilise en outre des informations de l'encodeur audio/vidéo 101 pour mettre en œuvre le procédé de régulation de débit selon l'invention. Par exemple, le module de traitement 12 utilise une information représentative d'un état d'une mémoire (« buffer » en terminologie anglo-saxonne) de sortie de l'encodeur audio/vidéo 101.

La **Fig. 3** illustre schématiquement un exemple de système de commande utilisé dans le système audio/vidéo.

Le système de commande 3 comprend un module multimédia 30, un module de contrôle 31, un module de traitement 32 et un module réseau 33. Le module multimédia 30 comprend un module 300 d'affichage (tel qu'un écran) et de diffusion de données audio (tel qu'au moins un haut-parleur). Le module 300 reçoit les données audio/vidéo décodées de la part d'un module de décodage 301.

Lorsque le système 1 est un drone, le système de commande 3 comprend un module de contrôle 31. Le module de contrôle 31 reçoit les commandes d'un opérateur obtenues grâce à une interface homme machine tel que des manettes, des boutons ou des commandes vocales et les traduit en signaux de commande.

Le module réseau 33 comprend un module de communication 33A, 33B et 33C correspondant respectivement aux liens réseau 2A, 2B et 2C. Le module de communication 33A est par exemple un premier module 5G. Le module de communication 33B est par exemple un deuxième module 5G. Le module de communication 33C est par exemple un module Wi-Fi.

Le module de traitement 32 reçoit les données audio/vidéo sous forme de paquets en provenance du module réseau, remet en ordre ces paquets, et transmet les paquets réordonnés au module de décodage audio/vidéo 301.

Par ailleurs, le module de traitement 32 reçoit les signaux de commande produits par le module de contrôle 31, les insère dans des paquets et prend en charge la répartition des paquets obtenus sur les modules de communication 33A, 33B et 33C.

Le module de traitement 32 reçoit en outre des statistiques sur l'état de chaque lien réseau 2A, 2B et 2C de la part du module réseau 33, met ces informations sous forme d'informations représentatives de la transmission et insère ces informations dans des paquets pour qu'elles soient transmises au drone 1. Dans un mode de réalisation, le module de traitement 32 utilise les deux liens réseau offrant les meilleures performances pour transmettre les informations représentatives de la transmission. Chaque paquet contenant des informations représentatives de la transmission est donc transmis une première fois sur le lien réseau offrant les meilleures performances de transmission et en parallèle, une deuxième fois sur le lien offrant les secondes meilleures performances de transmission.

Dans un mode de réalisation, lorsque le module de traitement 12 du drone 1 implémente un module de contrôle d'erreurs par anticipation, le module de traitement 32 implémente un module symétrique capable de décoder les données redondantes si nécessaire.

Dans un mode de réalisation, lorsque le module de traitement 12 du drone 1 implémente un module de retransmission, le module de traitement 32 implémente un module symétrique capable de demander des retransmissions de paquets perdus.

Dans un mode de réalisation, le module de traitement 32 récupère des informations représentatives de l'état du décodeur audio/vidéo 301 et les transmet sous forme de paquets au drone 1. Par exemple, le module de traitement 32 récupère l'état d'une mémoire d'entrée du module de décodage 301 et transmet des informations représentatives de cet état au drone 1. L'état de la mémoire d'entrée du drone peut être utilisé par le module de traitement 12 du drone 1 pour affiner sa régulation de débit.

Dans un mode de réalisation, le module réseau 33 comprend plus de trois modules de communication.

Comme nous l'avons vu plus haut, le drone 1 et le système de commande 3 communiquent en utilisant des paquets. Chaque paquet échangé comprend un entête global, décrit dans le tableau 1 ci-dessous, dont la syntaxe et la sémantique sont les mêmes quelle que soient les données transportées par le paquet. Un champ « *Packet ID* » décrit le contenu du paquet, *i.e.* décrit si le paquet contient une commande ou des données audio/vidéo. Un champ « *Packet type* » décrit si le paquet est une requête ou une réponse à une requête. Un paquet contenant des données audio/vidéo est par exemple considéré comme une requête. Un paquet d'accusé de réception est considéré comme une réponse à une requête.

Tableau 1 : Entête global

| Champ | Taille (en bits) | Sémantique |
|---|---|---|
| Packet ID | 4 | Décrit le contenu du paquet (commandes, données) |
| Packet type | 1 | Décrit si le paquet est une requête ou une réponse à une requête |
| Packet seqnum | 11 | Numéro de séquence du paquet |

A la suite de l'entête global, chaque paquet comprend un entête dépendant des données transportées par le paquet. Lorsque le paquet comprend des données audio/vidéo ou assimilées aux données audio/vidéo, que nous appelons par la suite données secondaires, le paquet comprend un entête, dit entête de paquet de données, décrit par le tableau 2.

Tableau 2 : entête de paquet de données

| Champ | Taille (en bits) | Sémantique |
|---|---|---|
| Stream Id | 4 | Identifiant du flux de données auquel le paquet appartient |
| Retransmission | 1 | Egal à « 1 » pour un paquet de retransmission ou un paquet secondaire |
| Reserved | 3 | Réservé pour le prochain usage |
| Seqnum | 32 | Numéro de séquence global |
| Data timestamp | 32 | Indicateur temporel des données transportées |
| Packet timestamp | 16 | Indicateur temporel d'envoi du paquet |
| Link seqnum | 16 | Numéro de séquence du lien utilisé |
| Data size | 16 | Taille des données utiles contenues dans le paquet |
| FEC | 16 | Informations concernant les données de contrôle d'erreur par anticipation |

L'entête de paquet de données comprend :

- un champ « Stream Id » identifiant le flux de données auquel le paquet appartient ;

- un champ « retransmission » égal à « 1 » pour un paquet de retransmission ou un paquet de données secondaires, « 0 » sinon ;

- un champ « reserved » réservé pour le prochain usage ;

- un « seqnum » comprenant un numéro de séquence du paquet de données ;

- un champ « Data timestamp » comprenant un indicateur temporel pour les données transportées par le paquet de données ;

- un champ « packet timestamp » comprenant un indicateur temporel d'envoi de paquets (i.e. instant d'envoi du paquet) ;

- un champ « link seqnum » comprenant un numéro de séquence du lien utilisé ;

- un champ « data size » donnant la taille en octet des données contenues dans le paquet ;

- un champ « FEC » donnant des indications sur la méthode employée pour générer des données de contrôle d'erreurs par anticipation.

Lorsque le paquet comprend des commandes permettant de contrôler le drone 1, l'entête global est suivi d'un entête de paquet de commandes représenté dans le tableau 3.

Tableau 3 : entête de paquet de commandes

| Champ | Taille (en bits) | Sémantique |
|---|---|---|
| Command type | 8 | Type de commande |
| Counter | 32 | Numéro de la commande |
| Retry | 8 | Utilisé pour les acquittements |
| Timestamp | 32 | Indicateur temporel, pour gérer les expirations de commande |

L'entête de paquet de commandes comprend :

- un champ « command type » décrivant le type d'une commande (par exemple, avant, arrière, à gauche, à droite, etc.) ;
- un champ « Counter » indiquant un numéro de commande ;
- un champ « Retry » utilisé pour lors d'acquittements ;
- un champ « timestamp » correspondant à un indicateur temporel d'envoi de la commande. Cet indicateur est utilisé par exemple pour déterminer si une commande est arrivée trop tard et qu'elle ne doit pas être considérée par le drone.

Lorsque le paquet comprend des informations représentatives de la transmission, l'entête global est suivi d'un entête de paquet d'informations représentatives de la transmission décrite dans le tableau 4.

Tableau 4 : Entête de paquets d'informations représentatives de la transmission

| Champ | Taille (en bits) | Sémantique |
|---|---|---|
| Links connected | 8 | Nombre de liens connectés |
| Link index | 8 | Indice du lien pour lequel les statistiques qui suivent sont envoyées |
| OWD | 16 | Délai d'aller |
| Ack end seq | 16 | Dernier paquet acquitté |
| Total link loss | 16 | Nombre de paquets perdus sur le lien |
| Total link received bytes | 32 | Octets reçus sur le lien |
| Link index | 8 | Indice du lien pour lequel les statistiques qui suivent sont envoyées |
| OWD | 16 | Délai d'aller |
| Ack end seq | 16 | Dernier paquet acquitté |
| Total link loss | 16 | Nombre de paquets perdus sur le lien |
| Total link received bytes | 32 | Octets reçus sur le lien |

L'entête de paquet d'informations représentatives de la transmission comprend des statistiques sur une pluralité de liens. Comme nous l'avons vu plus haut, ce type de paquet est transmis sur les deux meilleurs liens réseaux de la pluralité de liens. Plus précisément, l'entête de paquet d'informations représentatives de la transmission comprend :

- un champ « link connected » indiquant le nombre de liens entre le drone 1 et le système de commande 3 et donc le nombre de liens pour lesquels des statistiques sont transmises dans le paquet d'informations représentatives de la transmission ;
- au moins un champ « link index » donnant un indice du lien pour lequel les statistiques qui suivent sont envoyées, *i.e.* indice du lien concerné par les quatre champs suivants du paquet ;
- au moins un champ « OWD » transportant une information représentative d'un délai d'aller entre le drone et le système de commande pour le lien d'indice « link index » calculé par le module de traitement 32 ;
- au moins un champ « Ack end seq » transportant une information représentative du dernier paquet acquitté par le module de traitement 32 pour le lien d'indice « link index » ;
- au moins un champ «Total link loss » transportant une information représentative d'un nombre de paquets perdus sur le lien d'indice « link index » ;
- au moins un champ «Total link received bytes » transportant une information représentative d'une quantité d'octets reçus sur le lien d'indice « link index ».

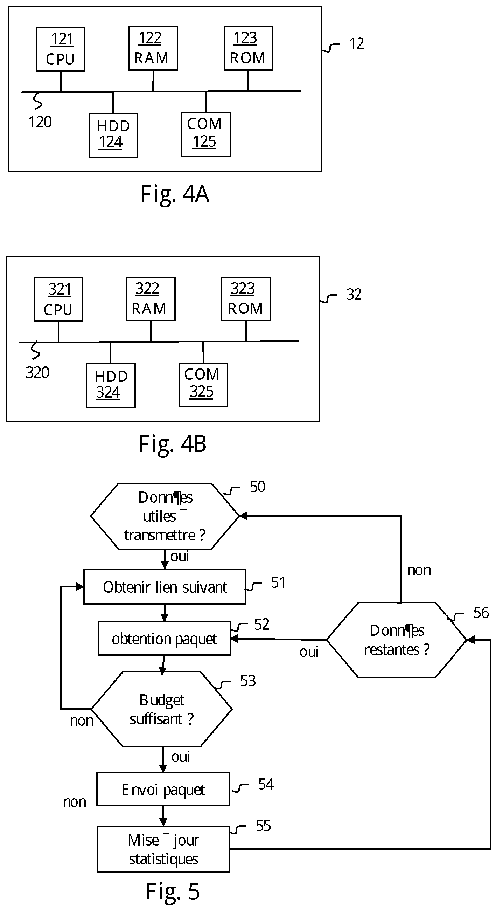

La **Fig. 4A** illustre schématiquement un exemple d'architecture matérielle du module de traitement 12. Le module de traitement 12 comprend alors, reliés par un bus de communication 120: un processeur ou CPU (« Central Processing Unit » en anglais) 121 ; une mémoire vive RAM (« Random Access Memory » en anglais) 122 ; une mémoire morte ROM (« Read Only Memory » en anglais) 123 ; une unité de stockage ou un lecteur de support de stockage, tel qu'un lecteur de cartes SD (« Secure Digital » en anglais) 124 ; un ensemble d'interfaces de communication 125 permettant au module de traitement 120 de communiquer avec les autres modules compris dans le drone 1.

Le processeur 121 est capable d'exécuter des instructions chargées dans la RAM 122 à partir de la ROM 123, d'une mémoire externe (non représentée), d'un support de stockage, tel qu'une carte SD, ou d'un lien réseau. Lorsque le module de traitement 120 est mis sous tension, le processeur 121 est capable de lire de la RAM 122 des instructions et de les exécuter. Ces instructions forment un programme d'ordinateur causant la mise en œuvre, par le processeur 121, du procédé décrit en relation avec les Figs. 5 à 11.

Tout ou partie du procédé décrit en relation avec les Figs. 5 à 11, peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 4B** illustre schématiquement un exemple d'architecture matérielle du module de traitement 32. Le module de traitement 32 comprend alors, reliés par un bus de communication 320: un processeur ou CPU 321 ; une mémoire vive RAM 322 ; une mémoire morte ROM 323 ; une unité de stockage ou un lecteur de support de stockage, tel qu'un lecteur de cartes SD 324 ; un ensemble d'interfaces de communication 325 permettant au module de traitement 320 de communiquer avec les autres modules compris dans le système de commande 3.

Le processeur 321 est capable d'exécuter des instructions chargées dans la RAM 322 à partir de la ROM 323, d'une mémoire externe (non représentée), d'un support de stockage, tel qu'une carte SD, ou d'un lien réseau. Lorsque le module de traitement 320 est mis sous tension, le processeur 321 est capable de lire de la RAM 322 des instructions et de les exécuter. Ces instructions forment un programme d'ordinateur causant la mise en œuvre, par le processeur 321, d'étapes de reformation du flux audio/vidéo à partir de paquets contenant les données audio/vidéo, d'étapes de formation de paquets contenant les signaux de contrôle, d'étapes de récupération de statistiques sur les liens réseau et d'insertion d'informations représentatives de la transmission obtenues à partir de ces statistiques dans des paquets.

Tout ou partie des étapes exécutées par le module de traitement 32, peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

Par la suite, nous décrivons le procédé de régulation de débit selon l'invention. Ce procédé comprend pour chaque lien d'une pluralité de liens, une exécution d'un procédé de régulation de débit de lien permettant de déterminer un débit à transmettre sur ledit lien et pour la pluralité de liens, une exécution d'un procédé de régulation de débit global permettant de répartir des données sur une pluralité de liens réseau. Le procédé de régulation de débit de lien et le procédé de régulation de débit global sont exécutés parallèlement, le procédé de régulation de débit global utilisant des informations fournies par le procédé de régulation de débit de lien au cours de son exécution.

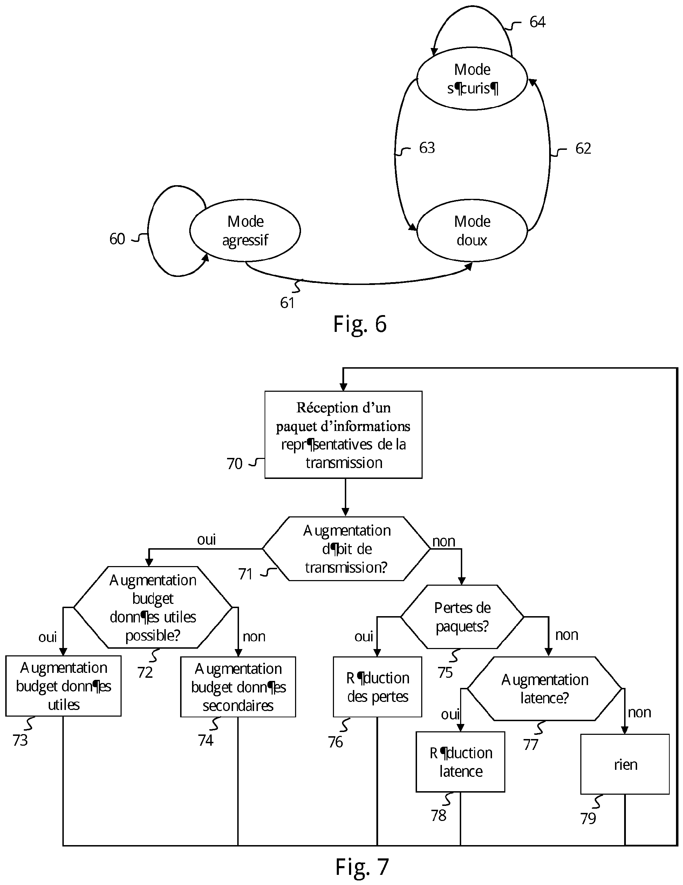

Le procédé de régulation de débit de lien est décrit en relation avec les Figs. 6 à 11 et le procédé de régulation de débit global est décrit en relation avec la Fig. 5.

Le procédé de régulation de débit de lien est mis en œuvre par un dispositif émetteur. Dans le cadre de l'exemple décrit en relation avec la Fig. 1, il est donc mis en œuvre par le drone 1 et plus précisément par le module de traitement 12. Comme nous l'avons vu plus haut, le module de traitement 12 exécute le procédé de régulation de débit de lien pour chaque lien réseau 2A, 2B et 2C. A chaque lien réseau 2A, 2B et 2C est donc associée une instance du procédé de régulation de débit de lien.

Le procédé de régulation de débit de lien comprend une pluralité de modes de régulation de débit.

La **Fig. 6** illustre schématiquement une pluralité de modes de régulation de débit utilisés dans le procédé de régulation de débit de lien selon l'invention.

La pluralité de modes de régulation de débit de lien comprend un premier mode de régulation de débit, dit mode agressif, exécuté au démarrage de la transmission. Dans le mode agressif, la seule modification possible du débit de transmission est une augmentation. Chaque valeur d'augmentation de débit est déterminée en ne prenant en compte aucune information représentative de la transmission. Pour un lien réseau, dit lien courant, le mode agressif est utilisé pour permettre au drone d'atteindre rapidement un débit maximum disponible sur le lien courant.

La pluralité de modes de régulation de débit comprend au moins un second mode de régulation mis en œuvre à la suite du mode agressif, dans lequel au moins une information représentative de la transmission sur le lien courant est utilisée pour augmenter ou diminuer le débit de transmission.

Dans le mode agressif, le module de traitement 12 boucle sur une étape 60 d'augmentation de débit tant que le débit de transmission du drone 1 n'a pas atteint un débit maximum disponible sur le lien courant. Dans une étape 61, le module de traitement passe du mode agressif vers un second mode lorsqu'au moins une information représentative de la transmission sur le lien courant indique que le débit de transmission a atteint le débit maximum disponible sur le lien courant. L'information représentative de la transmission est par exemple un taux de pertes de paquets ou un délai d'aller (OWD). Lorsque le taux de pertes de paquets (lorsqu'un écart entre le dernier délai d'aller mesuré *owd* et un délai d'aller minimum *min_OWD*) dépasse un seuil de passage prédéterminé (respectivement un écart prédéterminé), le module de traitement 12 passe à un second mode. Le seuil de passage prédéterminé est par exemple « 1% » de pertes de paquets. L'écart prédéterminé est par exemple égal à $2 \times min\_OWD$ ce qui équivaut à avoir un délai d'aller trois fois supérieur au délai d'aller minimum *min_OWD.*

Une fois passé dans un second mode de régulation, le module de traitement ne revient jamais dans le mode agressif.

Dans un mode de réalisation, la pluralité de modes de régulation de débit comprend deux seconds modes, un premier second mode, dit mode doux, et un deuxième second mode, dit mode sécurisé.

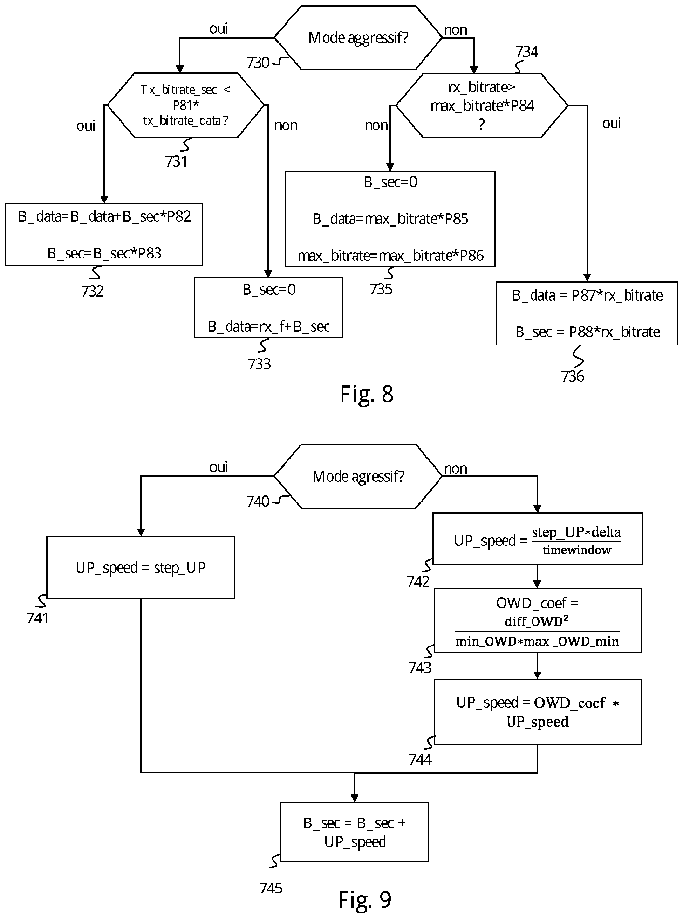

Lors de l'étape 61, le module de traitement 12 passe du mode agressif au mode doux. Dans le mode doux, le module de traitement continue à explorer le lien courant en augmentant le débit de transmission mais, cette fois-ci, de manière plus progressive. Pour ce faire, comme nous le verrons en relation avec la Fig. 9, le module de traitement 12 utilise des valeurs d'augmentation de débit plus faibles que dans le mode agressif.

Dès que les augmentations de débit successives effectuées dans le mode doux provoquent des pertes de paquets, une augmentation du délai d'aller ou que la valeur d'augmentation de débit est inférieure à un seuil d'augmentation bas prédéterminé, le module de traitement 12 passe au mode sécurisé lors d'une étape 62.

Dans le mode sécurisé, le module de traitement 12 diminue le débit de transmission dès que des pertes de paquets ou temps d'aller trop élevés sont constatés. Lorsque la diminution du débit de transmission a permis d'empêcher les pertes de paquets et que le temps d'aller est revenu à un niveau acceptable, le module de traitement 12 détermine une valeur d'augmentation de débit et applique l'augmentation déterminée au débit de transmission sur le lien courant. Si la valeur d'augmentation de débit est supérieure au seuil d'augmentation bas prédéterminé, le module de traitement retourne au mode doux lors d'une étape 63. Sinon, le module de traitement 12 boucle dans le mode sécurisé lors d'une étape 64. De cette manière, les valeurs d'augmentation dans le mode sécurisé sont plus faibles que dans le mode doux. Il y a donc moins de risques de provoquer des pertes de paquets ou des augmentations de délais d'aller dans le mode sécurisé que dans le mode doux.

La **Fig. 7** illustre schématiquement le procédé de régulation de débit de lien selon l'invention.

Comme dit plus haut, le procédé de régulation de débit de lien est exécuté en parallèle pour chaque lien de la pluralité de liens.

Dans une étape 70, le module de traitement 12 reçoit un paquet d'informations représentatives d'une transmission. Chaque réception d'un paquet d'informations représentatives d'une transmission provoque un lancement du procédé de régulation de débit de lien. Ces paquets sont transmis régulièrement à l'équipement de commande 3 par le drone 1, par exemple toutes les « 5 ms ».

Dans une étape 71, le module de traitement 12 détermine si une augmentation du débit de transmission sur le lien courant est possible. Pour ce faire le module de traitement 12 utilise notamment les informations contenues dans les paquets d'informations représentatives de la transmission.

A partir de l'information contenue dans le champ « Total link loss » et de l'information « Ack end seq », le module de traitement 12 calcule un taux de pertes courant $P_c$ sur le lien. L'information « Ack end seq » représente le numéro de séquence du dernier paquet acquitté. En divisant la valeur du champ « Total link loss » par une différence entre les deux dernières valeurs de l'information « Ack end seq » reçues dans des paquets d'informations représentatives de la transmission, on peut déterminer le taux de pertes courant $P_c$. A partir du taux de pertes courant $P_c$ et d'un taux

de pertes $P_{prev}$ précédant le taux de pertes courant $P_c$, le module de traitement 12 calcule une valeur d'augmentation du taux de pertes $\Delta_P = P_c - P_{prev}$.

A partir du taux de pertes courant $P_c$ et d'un nombre prédéfini de taux de pertes précédant le taux de pertes courant $P_c$, le module de traitement calcule un taux de pertes moyen sur le lien courant $\tilde{P}$.

A partir de l'information contenue dans le champ « OWD », le module de traitement 12 obtient un délai d'aller courant $owd_c$ et calcule une différence $\Delta_{owd}$ entre le délai d'aller courant $owd_c$ et une valeur minimale du délai d'aller courant $min\_OWD$. La valeur minimale du délai d'aller courant $min\_OWD$ est calculée au fur et à mesure de la transmission en prenant la valeur minimale du délai d'aller observée.

A partir de l'information contenue dans le champ « Total link received bytes », le module de traitement calcule le débit $rx\_bitrate$ de réception du système de commande 3 sur le lien courant. Chaque paquet comprend dans son entête un indicateur temporel (non représenté dans les tableaux 1 à 4). Le débit $rx\_bitrate$ est calculé en divisant la valeur du champ « Total link received bytes » par une différence entre les valeurs d'indicateur temporel des deux derniers paquets d'informations représentatives de la transmission. Dans un mode de réalisation, cette valeur de débit $rx\_bitrate$ est filtrée, par exemple par un filtre de Butterworth d'ordre 2, afin d'atténuer d'éventuelles fortes variations dans les débits $R_x$ calculés successivement.

A la suite de ces calculs, le module de traitement 12 vérifie si des contraintes d'un ensemble prédéfini de contraintes sont respectées :

$$\Delta_P < \varepsilon;$$
$$\tilde{P} < \varepsilon;$$
$$\Delta_{owd} < 3 \times min\_OWD;$$
$$owd_c < timewindow/2;$$

$$d(T_x)/dt - \varepsilon < d(rx\_bitrate)/dt \le d(T_x)/dt + \varepsilon;$$

où $\varepsilon$ est une valeur faible par exemple égale à l'unité, $T_x$ est un débit de transmission sur le lien courant par le drone 1, $\dfrac{d(T_x)}{dt}$ est une dérivée première des variations du débit de transmission $T_x$ et $\dfrac{d(R_x)}{dt}$ est une dérivée première des variations du débit de réception $R_x$.

Si chaque contrainte de l'ensemble prédéfini de contraintes est respectée, le module de traitement 12 passe à une étape 72. Sinon, le module de traitement 12 passe à une étape 75.

Augmenter un débit de transmission est toujours risqué lorsqu'on a qu'une connaissance approximative de la bande passante disponible sur un réseau. L'augmentation risque de provoquer des pertes de données utiles (données audio/vidéo ou assimilées). Pour limiter l'impact que pourrait avoir une augmentation de débit sur des données utiles, le débit de transmission sur un lien courant est partagé entre un budget de débit des données utiles comprenant les données audio/vidéo, dit budget utile, et un budget de débit de données secondaires, dit budget secondaire, non nécessaire au décodage des données audio/vidéo. Seul le budget secondaire est augmenté lors d'une augmentation du débit de transmission. Le budget de données secondaires est augmenté pour tester le débit disponible sur le réseau. Les données secondaires étant constituées soit de données redondantes, soit de données de remplissage (« stuffing data » en terminologie anglo-saxonne) comprenant par exemple une suite de bits à zéro ou une suite de bits à « 1 », leur perte n'a pas d'incidence sur le décodage des données utiles. Le budget utile n'est augmenté que lorsqu'aucune information représentative de la transmission reçue suite à une augmentation du budget secondaire n'indique une augmentation d'un risque de pertes de données (*i.e.* une augmentation du taux de pertes de paquets ou une augmentation du temps d'aller).

Lors de l'étape 72, le module de traitement 12 détermine quel budget peut être augmenté. Pour ce faire, le module de traitement 12 vérifie si le budget secondaire $B\_sec$ est inférieur à un pourcentage prédéfini $P70$ du débit de transmission $tx\_bitrate$. Par exemple $P70=15\%$. Lorsque $B\_sec > P70*tx\_bitrate$, le module de traitement 12 détermine que c'est le budget utile qui peut être augmenté. Le module de traitement 12 augmente alors le budget utile lors d'une étape 73. Sinon, le module de traitement 12 augmente le budget secondaire lors d'une étape 74. Les étapes 72, 73 et 74 sont détaillées en relation avec les Figs. 8 et 9.

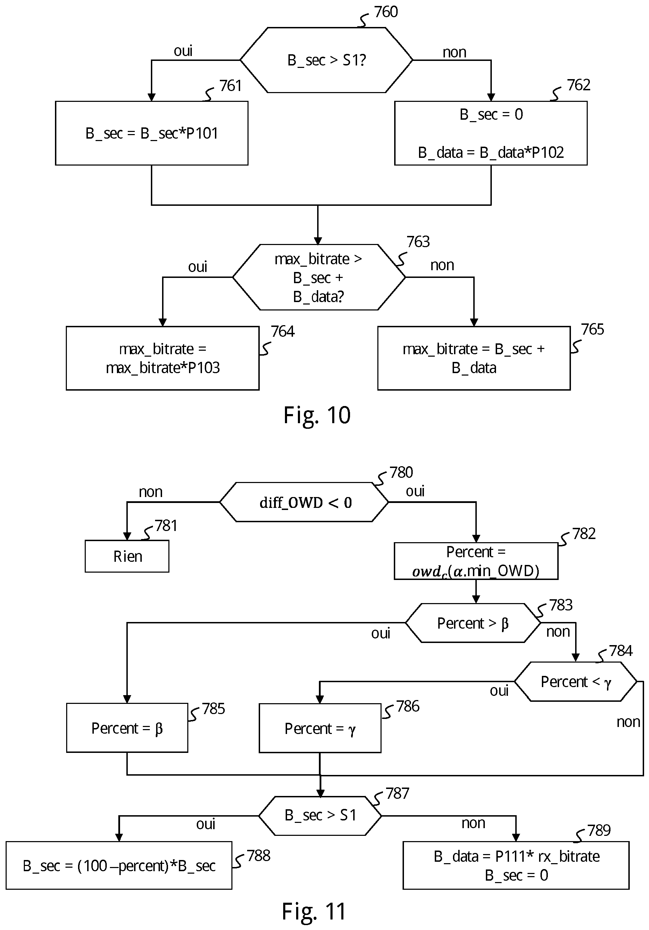

Lors de l'étape 75, le module de traitement 12 détermine si le taux de pertes courant $P_c$ est supérieur à zéro. Si oui, le module de traitement 12 exécute une étape 76 au cours de laquelle il applique une réduction du débit de transmission permettant de réduire le taux de pertes sur le lien. L'étape 76 est détaillée en relation avec la Fig. 10.

Si le taux de pertes courant $P_c$ est nul, le module de traitement 12 vérifie si la latence est trop importante lors d'une étape 77.

Si la latence est admissible, le module de traitement 12 ne fait rien et se met en attente lors d'une étape 79. Sinon, le module de traitement 12 applique une réduction du débit de transmission permettant de réduire le délai d'aller lors d'une étape 78. Les étapes 77, 78 et 79 sont détaillées en relation avec la Fig. 11.

Les étapes 73, 74, 76, 78 et 79 sont suivies de l'étape 70.

On note que, alors que les étapes d'augmentation du débit de transmission 73 et 74 peuvent concerner les trois modes de régulation de débit, les étapes de diminutions du débit de transmission ne concernent que les seconds modes de régulation de débit. Par ailleurs, dès qu'une des contraintes examinées lors de l'étape 71 n'est pas vérifiée, le module de traitement 12 quitte irrémédiablement le mode agressif.

La **Fig. 8** illustre schématiquement un premier détail de l'étape 73 du procédé de régulation de débit d'un lien réseau selon l'invention.

Dans une étape 730, le module de traitement 12 détermine s'il se trouve dans le mode agressif. Il suffit pour cela que le module de traitement 12 vérifie qu'il n'a constaté aucune perte de paquet jusque-là.

Si le module de traitement 12 se trouve dans le mode agressif, il passe à l'étape 731. Sinon, il exécute l'étape 734.

Lors de l'étape 731, le module de traitement 12 vérifie si un débit de transmission des données secondaires *tx_bitrate_sec* est inférieur à un premier pourcentage prédéfini *P81* d'un débit de transmission de données utiles *tx_bitrate_data.* Par exemple *P81*=15%.

Si *tx_bitrate_sec < P81\*tx_bitrate_data,* lors d'une étape 732, le module de traitement 12 augmente le budget utile *B_data* d'un deuxième pourcentage prédéfini *P82* du budget secondaire *B_sec* (*B_data=B_data+B_sec\*P82*) et diminue le budget secondaire *B_sec* de la valeur d'augmentation du budget utile *B_data* (*B_sec=B_sec\*P83*). Par exemple, *P82*=*P83*=50%.

Si le débit de transmission des données secondaires *tx_bitrate_sec* n'est pas inférieur au premier pourcentage prédéfini *P81* du débit de transmission de données utiles *tx_bitrate_data,* lors d'une étape 733, le module de traitement 12 fixe la valeur du budget utile *B_data* à la somme du budget de transmission *rx_f* et du budget secondaire *B_sec* et met le budget secondaire *B_sec* à zéro.

Les étapes 732 et 733 correspondent à l'étape 73 dans le cas du mode agressif. On note que dans ces deux étapes, le budget total de transmission (la somme du budget utile *B_data* et du budget secondaire *B_sec*) n'a pas changé. Seul le partage entre budget utile *B_data* et budget secondaire *B_sec* a été modifié pour augmenter le budget utile *B_data.* Ainsi, l'augmentation du budget utile *B_data* n'a pas provoqué d'augmentation du risque de pertes de paquets. L'augmentation du budget secondaire *B_sec* est volontairement limitée pour que les données secondaires ne prennent pas une part trop importante dans les données transmises.

Lors de l'étape 734, le module de traitement 12 vérifie si le débit *Rx_bitrate* de réception par le système de contrôle 3 atteint un troisième pourcentage prédéfini *P84* du maximum de débit disponible sur le réseau *max_bitrate.* Par exemple, *P84*=50%. On suppose ici que le débit *max_bitrate* a été obtenu par le module de traitement 12 en utilisant les informations contenues dans le champ « Total link received bytes » des paquets d'informations représentatives de la transmission.

Lorsque *Rx_bitrate > max_bitrate\*P84,* le module de traitement 12 alloue lors d'une étape 736, respectivement au budget utile *B_data* et au budget secondaire *B_sec* un quatrième pourcentage *P87* et un cinquième pourcentage *P88* prédéfinis du débit de réception *rx_bitrate,* une somme du budget utile *B_data* et du budget secondaire *B_sec* étant égale audit débit de réception *rx_bitrate,* le budget utile *B_data* étant supérieur au budget secondaire *B_sec* :

$$B\_data = P87*rx\_bitrate$$

$$B\_sec = P88*rx\_bitrate$$

$$B\_data+B\_sec=rx\_bitrate$$

*B_data>Bsec*

Dans un mode de réalisation *P87*=*90%* et *P88*=*10%.* Lors de l'étape 736, en prenant des pourcentages du débit de réception *rx_bitrate,* on s'assure de rester dans les limites de bande passante du lien courant.

Lorsque *Rx_bitrate ≤ max_bitrate\*P84,* lors d'une étape 735, le module de traitement 12 met le budget secondaire *B_sec* à zéro et alloue au budget utile *B_data* un sixième pourcentage *P85* prédéfini dudit maximum *max_bitrate.* Par ailleurs, le module de traitement 12 diminue le maximum *max_bitrate* d'un septième pourcentage *P86* prédéfini. En effet, le passage à l'étape 735 implique que pour une raison inconnue, le débit de transmission a chuté brusquement (ou moins probablement a chuté progressivement) pour atteindre la valeur *max_bitrate\*P84.* Dans ces conditions, il n'est pas certain que le débit de transmission maximum atteignable auparavant est toujours disponible. Il est préférable de diminuer ce maximum pour diminuer les risques lors des ré-augmentations du débit de transmission. Dans un mode de réalisation, *P85=50%* et *P86*=10%. Ainsi, lorsqu'on observe que le débit de réception *rx_bitrate* est très inférieur au débit maximum *max_bitrate* (ici le débit de réception *rx_bitrate* est inférieur à la moitié du débit maximum *max_bitrate*), on augmente le débit de transmission directement à la moitié du débit maximum *max_bitrate.* L'augmentation dans ce cas peut donc être rapide si le débit de réception est très bas, mais sécurisée puisqu'on reste très loin du débit maximum observé sur le lien courant.

Les étapes 735 et 736 correspondent à l'étape 73 dans le cas du mode doux ou du mode sécurisé.

Dans les modes doux et sécurisés, le budget secondaire ne peut pas dépasser le pourcentage *P81* (ici 15%) prédéfini du débit de réception *rx_bitrate.*

On note que dans les étapes 734, 735 et 736, on prend en compte des informations représentatives de la transmission (*rx_bitrate, max_bitrate*) pour déterminer les budgets utile et secondaire alors que dans les étapes 731, 732 et 733, ces informations n'étaient pas utilisées.

La **Fig. 9** illustre schématiquement un détail de l'étape 74 du procédé de régulation de débit d'un lien réseau selon l'invention.

Dans une étape 740, le module de traitement 12 détermine s'il est dans le mode agressif. Si le module de traitement 12 est dans le mode agressif, lors d'une étape 741, le module de traitement 12 obtient une valeur d'augmentation prédéfinie *step_UP* et affecte cette valeur à une variable *UP_speed* représentant l'augmentation de débit du budget secondaire *B_sec.* Dans une étape 742, le module de traitement ajoute la valeur de la variable *UP_speed* au budget de débit secondaire *B_sec :*

$$B\_sec = B\_sec + UP\_speed \ ;$$

Le budget secondaire augmente donc de la valeur d'augmentation prédéfinie *step_UP.* Dans un mode de réalisation, *step_UP* = 100 octets.

Si le module de traitement 12 n'est pas dans le mode agressif, le calcul de la valeur de la variable *UP_speed* se fait en trois étapes 742, 743 et 744.

Lors de l'étape 742, le module de traitement 12 calcule une valeur intermédiaire de la variable *UP_speed :*

$$UP\_speed = \frac{step\_UP * delta}{timewindow}$$

où delta est une différence telle que *delta = timewindow -owd$_c$*

Lors d'une étape 743, le module de traitement 12 calcule un coefficient *OWD_coef* basé sur le délai d'aller :

$$OWD\_coef = \frac{diff\_OWD^2}{min\_OWD * max\_OWD\_min}$$

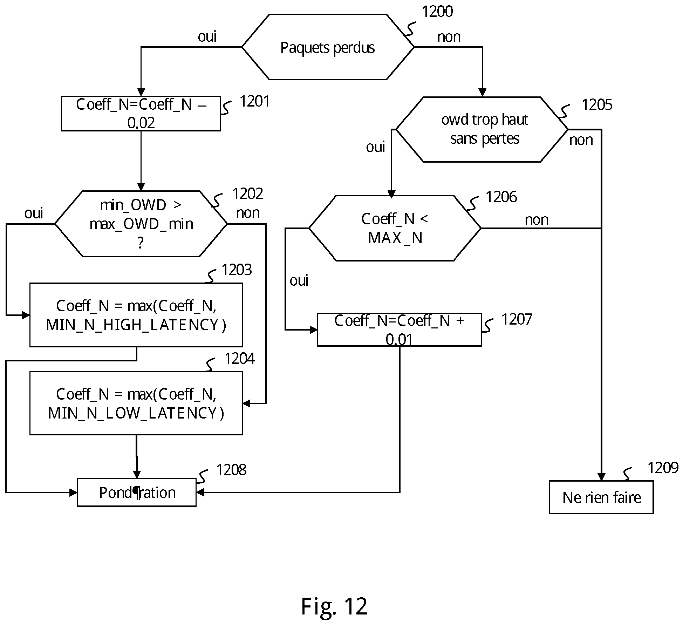

où *diff_OWD* est un écart tel que *diff_OWD = Coef_N $\times$* (min_*OWD* - owd$_c$). Coef_N est une variable dont le calcul est expliqué par la suite en relation avec la Fig. 12.*). max_OWD_min* est une valeur utilisée pour discriminer des liens à faible latence de liens à forte latence. Dans un mode de réalisation la valeur *max_OWD_min* est fixée à « 200ms » et permet de discriminer des liens classiques disposant de latences inférieures à « 100ms », de liens satellitaires pour lesquels la latence est de l'ordre de « 300ms ».

Lors d'une étape 744, la valeur de la variable *UP_speed* est calculée :

$$UP\_speed = OWD\_coef * UP\_speed$$

La différence *delta* étant inférieure à la durée *timewindow,* la valeur intermédiaire de la variable *UP_speed* est nécessairement inférieure à la valeur d'augmentation prédéfinie *step_UP.* De même le numérateur *diff_OWD²* est par définition inférieur au dénominateur *min_OWD $*$ max _OWD_min.* Le coefficient *OWD_coef* est donc nécessairement positif et inférieur à l'unité. La valeur de la variable *UP_speed* dans le cas du mode doux et du mode sécurisé est donc inférieure à la valeur d'augmentation prédéfinie *step_UP.* Les augmentations du budget secondaire *B_sec* dans le mode doux et dans le mode sécurisé sont donc inférieures aux augmentations du budget secondaire *B_sec* dans le mode agressif. Par ailleurs, plus le délai d'aller *owd* s'approche de la durée *timewindow,* plus l'augmentation du budget secondaire *B_sec* est faible. De plus, plus l'écart *diff_OWD* est grand, plus l'augmentation du budget secondaire *B_sec* est faible. Des augmentations de débit faibles permettent de réduire les risques de pertes de paquets.

L'étape 744 est suivie de l'étape 745 déjà expliquée.

La **Fig. 10** illustre schématiquement un détail de l'étape 76 du procédé de régulation de débit d'un lien réseau selon l'invention.

L'étape 76 correspond à un cas où des pertes de paquets ont été constatées. Dans une étape 760, le module de traitement 12 vérifie s'il peut diminuer le budget secondaire *B_sec*. Pour cela, le module de traitement 12 vérifie que le budget secondaire *B_sec* est suffisamment élevé pour qu'une diminution de ce budget ait un impact sur la transmission. Le budget secondaire *B_sec* est donc comparé à un budget minimum prédéfini *S1*. Dans un mode de réalisation *S1*=100kbits/s. Si le budget secondaire *B_sec* est supérieur au budget minimum *S1,* le module de traitement 12 exécute une étape 761. Sinon, il exécute une étape 762.

Lors de l'étape 761, le module de traitement 12 diminue le budget secondaire *B_sec* d'un huitième pourcentage prédéfini *P101* :

$$B\_sec = B\_sec * P101$$

Dans un mode de réalisation, *P101*=90%.

Lors de l'étape 762, le module de traitement 12 réduit le débit secondaire *B_sec* à zéro et diminue le budget utile *B_data* d'un neuvième pourcentage prédéfini *P102.*

$$B\_data = B\_data * P102$$

Dans un mode de réalisation, *P102*=90%.

Le débit maximum de débit disponible sur le réseau *max_bitrate* est ensuite mis à jour lors d'étapes 763, 764 et 765.

Lors de l'étape 763, le module de traitement 12 vérifie si le débit de transmission actuel (*i.e.* si la somme du budget secondaire *B_sec* et du budget utile *B_data*) est supérieur au débit *max_bitrate.*

Si le débit *max_bitrate* est inférieur au débit de transmission actuel, le module de traitement 12 fixe la valeur du débit *max_bitrate* à la valeur du débit de transmission actuel lors d'une étape 765 :

$$max\_bitrate = B\_sec + B\_data$$

Si le débit *max_bitrate* est supérieur au débit de transmission actuel, le module de traitement 12 diminue la valeur du débit *max_bitrate* d'un dixième pourcentage prédéfini *P103* :

$$max\_bitrate = max\_bitrate * P103$$

Dans un mode de réalisation, *P103*=90%.

Dans les étapes 763, 764 et 765, on a donc pris en compte le fait que le débit maximum disponible sur le réseau a dû diminuer.

La **Fig. 11** illustre en détail les étapes 77, 78 et 79 du procédé de régulation de débit d'un lien réseau selon l'invention.

Dans une étape 780, correspondant à l'étape 77, le module de traitement 12 vérifie si la latence est trop importante. Pour ce faire le module de traitement 12 détermine si le dernier écart *diff_OWD* calculé est inférieur à zéro.

Si l'écart *diff_OWD* est supérieur ou égal à zéro, le module de traitement 12 met en œuvre une étape 781 correspondant à l'étape 79. Lors de cette étape le module de traitement 12 ne fait rien et se met en attente.

Si l'écart *diff_OWD* est inférieur à zéro, le module de traitement 12 met en œuvre des étapes 782 à 789 correspondant à l'étape 78.

Dans une étape 782, le module de traitement 12 calcule une variable *Percent* représentative d'un pourcentage de baisse et telle que

$$Percent = owd_c.(\alpha.min\_OWD)$$

Dans un mode de réalisation, $\alpha$ = 1.5.

Dans une étape 783 le module de traitement 12 compare la variable *Percent* à une valeur prédéfinie $\beta$. Dans un mode de réalisation $\beta$=10.

Si *Percent* > $\beta$, alors *Percent* est fixé à la valeur prédéfinie $\beta$. Ainsi le pourcentage de baisse *Percent* ne dépasse jamais la valeur prédéfinie $\beta$ (ici 10%). La valeur prédéfinie $\beta$ est donc le pourcentage de baisse maximum.

Si *Percent* < $\beta$, le module de traitement 12 compare la variable Percent à une valeur prédéfinie $\gamma$. Dans un mode de réalisation $\gamma$=5. Si *Percent* < $\gamma$, alors *Percent* est fixé à la valeur prédéfinie $\gamma$. Ainsi le pourcentage de baisse *Percent* n'est jamais inférieur à la valeur prédéfinie $\gamma$ (ici 5%). La valeur prédéfinie $\gamma$ est donc le pourcentage de baisse minimum.

Les étapes 784, lorsque la variable Percent est comprise entre la valeur prédéfinie $\gamma$ et la valeur prédéfinie $\beta$, 785 et 786, sont suivies d'une étape 787.

Lors de l'étape 787, le module de traitement 12 compare le budget secondaire *B_sec,* à une valeur de budget secondaire minimum prédéfinie *S1*. En dessous du budget secondaire minimum prédéfini *S1*, le budget de débit secondaire *B_sec* est considéré comme non significatif. Il est préférable dans ce cas de le ramener à zéro. Dans un mode de réalisation, *S1*= 100 Kbits/s.

Si *B_sec* > *S1,* le budget de débit secondaire *B_sec* est diminué de la manière suivante :

$$B\_\sec = \frac{(100 - Percent) \times B\_sec}{100}$$

Si B_sec $\leq$ S1, le budget secondaire *B_sec* est mis à zéro, et le budget utile B_data est diminué de la manière suivante :

$$B\_data = P111 \times rx\_bitrate$$

où *P111* est un onzième pourcentage prédéfini *P111.* Dans un mode de réalisation P111 = 90%

Les étapes 73, 74, 76, 78 et 79 sont suivies de l'étape 70 dès réception d'un paquet d'informations représentatives de la transmission par le module de traitement 12.

La **Fig. 5** illustre schématiquement un procédé de régulation de débit global selon l'invention permettant une répartition de données sur une pluralité de liens réseau.

Le procédé de régulation de débit global utilise des résultats des différentes instances du procédé de régulation de débit de lien pour répartir les paquets sur les liens réseau 2A, 2B et 2C. Le procédé de régulation de débit global est exécuté périodiquement avec une période prédéfinie pouvant être fixée par exemple à une valeur entre « 2 » à « 10 » ms.

Dans une étape 50, le module de traitement 12 vérifie si des données sont à transmettre au système de commande 3. Par exemple, il vérifie un état d'une mémoire (buffer) de sortie de l'encodeur audio/vidéo 101 ou si des données secondaires sont à transmettre. Lors de l'étape 50, le module de traitement vérifie aussi si suffisamment de budget est disponible sur au moins un des liens réseaux 2A, 2B ou 2C pour transmettre les données qu'il a à transmettre. Pour ce faire, le module de traitement fait la somme du budget utile *B_data* et du budget secondaire *B_sec* pour chaque lien 2A, 2B et 2C.

Si aucune donnée n'est à transmettre ou si aucun lien n'a un budget suffisant, le module de traitement 12 se met en attente.

Sinon, le module de traitement 12 obtient, lors d'une étape 51, une information représentative du lien réseau qu'il doit utiliser. Dans un mode de réalisation, les liens réseaux sont classés dans une liste ordonnée. Le module de traitement 12 parcourt cette liste selon l'ordre de la liste. Lors de l'étape 51, le module de traitement 12 utilise le lien réseau suivant le dernier lien réseau utilisé dans la liste. Si le dernier lien réseau utilisé est le dernier de la liste, le module de traitement 12 reprend la liste au début. Nous appelons le lien choisi lors de l'étape 51, lien sélectionné.

Dans une étape 52, le module de traitement 12 obtient un paquet de données à transmettre.

Dans une étape 53, le module de traitement 12 vérifie que le budget du lien sélectionné est suffisant pour transmettre ledit paquet de données. Si c'est un paquet de données utiles, le module de traitement 12 vérifie que le budget utile *B_data* du lien sélectionné est suffisant. Si c'est un paquet de données secondaires, le module de traitement 12 vérifie que le budget secondaire *B_sec* du lien sélectionné est suffisant.

Si le budget n'est pas suffisant, le module de traitement 12 retourne à l'étape 51 pour passer au lien réseau suivant dans la liste.

Sinon, dans une étape 54 le module de traitement 12 fournit ledit paquet au module de communication correspondant au lien réseau sélectionné et provoque l'envoi du paquet par ledit module de communication.

Dans une étape 55 le module de traitement 12 met à jour le débit de transmission de données audio/vidéo et si nécessaire de transmission des données redondantes du contrôle d'erreur par anticipation et des retransmissions en utilisant des informations sur les données transmises précédemment sur les liens réseau. Ceci permet de déterminer quel pourcentage des données transmises représente les données audio/vidéo. Ce pourcentage peut ensuite être utilisé pour calculer une contrainte de débit à allouer à l'encodeur audio/vidéo 101 (en appliquant ledit pourcentage à la somme des budgets utiles obtenus pour chaque lien). Le débit des données redondantes du contrôle d'erreur par anticipation et/ou des retransmissions dépend directement du débit audio/vidéo et ne peut pas être modifié.

Dans une étape 56, le module de traitement 12 vérifie que des données restent à transmettre suite à l'envoi du paquet lors de l'étape 54. Si des données restent à transmettre, le module de traitement 12 retourne à l'étape 52. Sinon, le module de traitement retourne à l'étape 50 et se met en attente de nouvelles données à transmettre.

Dans un mode de réalisation, les liens réseau sont ordonnés dans la liste en fonction d'une information représentative de performances de chaque lien réseau. A intervalles réguliers, par exemple à chaque réception d'un paquet d'informations représentatives de la transmission ou toutes les $T$ secondes, avec par exemple $T=1s$, le module de traitement 12 calcule une métrique de performance $Q_i$ pour chaque lien (avec i= 2A, 2B ou 2C).

$$Q_i = \frac{(B\_data_i + B\_sec_i)^2}{(P_c^i)^2 \times TD} \times \left(\frac{timewindow}{3} - owd_c^i\right)$$

où $B_{data_i}$ est le budget utile pour le lien $i$, $B_{sec_i}$ est le budget secondaire pour le lien $i$, $P_c^i$ est le taux de pertes de paquets courant pour le lien $i$, $TD$ est une somme de budget secondaire pour tous les liens ($TD = \sum_{i=2A,2B,2C} B_{sec_i}$), et $owd_c^i$ est le dernier délai d'aller mesuré pour le lien réseau i.

On remarque que plus le budget de débit de transmission d'un lien réseau ($B_{data_i} + B_{sec_i}$) est élevé, plus la métrique de performance de ce lien est élevée. De plus, plus le taux de pertes de paquets sur un lien réseau $P_c^i$ est bas, plus la métrique de performance de ce lien est élevée. Enfin, plus le délai d'aller est faible par rapport à la taille de la fenêtre de congestion, plus la métrique de performance de ce lien est élevée. Les liens ayant un budget de débit élevé, un faible taux de pertes de paquets et un délai d'aller faible se retrouvent donc en tête de liste. La métrique de performance $Q_i$ est donc une fonction croissante du budget de données à transmettre par le lien $i$ ($B_{data_i} + B_{sec_i}$), une fonction décroissante d'une information représentative d'un taux de pertes de paquets sur le lien $i$ (ici $P_c^i$ mais cela pourrait tout aussi bien être un taux de pertes de paquets moyen), et une fonction croissante d'une différence entre la durée *timewindow* et une information représentative d'un temps d'aller mesuré pour le lien $i$ $\left(\frac{timewindow}{3} - owd_c^i\right)$.

On note que dans cette métrique, en prenant le carré du budget de débit de transmission et du taux de pertes de paquets, on donne plus d'importance à ces deux informations représentatives du réseau qu'au délai d'aller. Donner plus d'importance au budget de débit de transmission et au taux de perte qu'à la latence permet d'éviter de pénaliser inutilement des liens pour lesquels une forte latence est normale, comme les liens satellitaires. Les liens à forte latence mais sans pertes seront aussi privilégiés par rapport aux réseaux à pertes disposant d'une latence plus faible.

Dans un mode de réalisation, lorsque la liste est ordonnée selon la métrique de performance $Q_i$ et que lors de l'étape 56, le module de traitement 12 se retrouve sans données à transmettre immédiatement après une transmission de paquets, le prochain lien utilisé pour transmettre un paquet est le premier de la liste. La liste est ensuite parcourue en repartant du premier lien de la liste. On privilégie ainsi l'envoi de données sur les liens ayant la meilleure métrique de performance *(i.e.* les meilleurs liens).

La **Fig. 12** décrit un détail de l'étape 743 et plus particulièrement une méthode de calcul de la variable *Coef_N.*

La méthode décrite en relation avec la Fig. 12 est exécutée périodiquement avec une période prédéfinie δ par le module de traitement 12. Dans un mode de réalisation, la méthode est exécutée toutes les « 10 » secondes (δ=10 secondes). Pendant la période δ précédant une exécution de la méthode, le module de traitement 12 évalue le nombre de pertes ainsi qu'un nombre de fois que le délai d'aller dépasse une valeur *Coeff_N * min_OWD* sans que des pertes de paquets soient constatées.

Dans une étape 1200, le module de traitement 12 détermine si des pertes ont été constatées pendant la période δ précédant l'exécution courante de la méthode de détermination de la variable *Coeff_N.*

Si des pertes ont été constatées, dans une étape 1201 *Coeff_N* est diminué de « 0.02 ».

Dans une étape 1202, le module de traitement 12 vérifie si le lien est un lien à faible latence ou à forte latence. Pour ce faire, le module de traitement compare *min_OWD* à *max_OWD_min*. Si *min_OWD > max_OWD_min,* le module de traitement 12 détermine que le lien est un lien à forte latence. Dans ce cas, il exécute une étape 1203. Sinon il exécute une étape 1204.

Dans l'étape 1203, le module de traitement 12 calcule une valeur de la variable *Coeff_N* en prenant le maximum entre la valeur de *Coeff_N* calculée lors de l'étape 1201 et une valeur minimale de *Coeff_N* adaptée au lien à forte latence MIN_N_HIGH_LATENCY.

Dans l'étape 1204, le module de traitement 12 calcule une valeur de la variable *Coeff_N* en prenant le maximum entre la valeur de *Coeff_N* calculée lors de l'étape 1201 et une valeur minimale de *Coeff_N* adaptée au lien à faible latence *MIN_N_LOW_LATENCY.*

Les étapes 1203 et 1204 sont suivies d'une étape 1208 au cours de laquelle, la valeur de la variable *Coeff_N* est pondérée. Dans un mode de réalisation, la valeur de *coeff_N* calculé par pondération lors de l'étape 1208 résulte d'une moyenne pondérée des quatre dernières valeurs de la variable *coeff_N* calculées, la dernière valeur calculée ayant le poids le plus élevé dans la moyenne pondérée.

Si aucune perte de paquet n'a été constatée au cours de l'étape 1200, le module de traitement 12 vérifie lors d'une étape 1205 combien de fois le délai d'aller a dépassé la valeur $Coeff\_N * min\_OWD$ pendant la période $\delta$ précédente sans que des pertes de paquets soient constatées. Si le délai d'aller a dépassé un nombre de fois prédéfini $K_{owd}$ (par exemple $K_{owd}$ = 5) la valeur $Coeff\_N * min\_OWD$ sans que des pertes de paquets soient constatées, le module de traitement 12 exécute une étape 1206. Sinon, le module de traitement 12 décide de ne pas modifier la valeur de la variable *Coeff_N* au cours d'une étape 1209.

Lors de l'étape 1206, le module de traitement 12 vérifie si la valeur de la variable *Coeff_N* est inférieure à une valeur maximale *MAX_N* prédéfinie de la valeur *Coeff_N*.Si oui, la valeur de la variable *Coeff_N* est incrémentée de « 0.01 ». Sinon, le module de traitement 12 exécute l'étape 1209 déjà expliquée.

L'étape 1207 est suivie de l'étape 1208.

L'étape 1208 est toutefois optionnelle et le module de traitement 12 pourrait aussi utiliser la valeur de la variable *Coeff_N* issue des étapes 1203, 1204 et 1207.

Dans un mode de réalisation :

- *MIN_N_HIGH_LATENCY* = 1.5
- *MIN_N_LOW_LATENCY* = 2.5
- *MAX_N* = 4.

## Revendications

1. Procédé de régulation de débit lors d'une transmission de données audio/vidéo sur un lien réseau entre un émetteur et un récepteur, ledit procédé étant mis en œuvre lors de réceptions par l'émetteur d'informations représentatives de la transmission transmises par le récepteur, **caractérisé en ce que** le procédé est mis en œuvre par l'émetteur et comprend :

   une pluralité de modes de régulation de débit comprenant un premier mode de régulation de débit, exécuté au démarrage de la transmission, dans lequel la seule modification possible du débit de transmission par l'émetteur est une augmentation, chaque valeur d'augmentation de débit étant déterminée en ne prenant en compte aucune information représentative de la transmission, et au moins un second mode de régulation mis en œuvre à la suite du premier mode, dans lequel au moins une des informations représentatives de la transmission est utilisée pour augmenter ou diminuer le débit de transmission, un passage du premier mode vers un second mode se faisant lorsqu'une des informations représentatives de la transmission indique que le débit de transmission a atteint un débit maximum disponible sur le lien réseau ;
   ledit débit de transmission étant partagé entre un budget de débit de données utiles comprenant les données audio/vidéo, dit budget utile, et un budget de débit de données secondaires, dit budget secondaire, non nécessaires au décodage des données audio/vidéo, seul le budget secondaire est augmenté lors d'une augmentation du débit de transmission, le budget utile n'étant augmenté que lorsqu'aucune information représentative de la transmission reçue suite à une augmentation du budget secondaire n'indique une augmentation d'un risque de pertes de données.

2. Procédé selon la revendication 1 **caractérisé en ce que**, dans le premier mode, lorsqu'au moins une des informations représentatives de la transmission indique qu'une augmentation d'un budget utile est possible (72), le procédé comprend :

   augmenter (732) le budget utile d'un deuxième pourcentage prédéfini du budget secondaire lorsqu'un débit de transmission par l'émetteur des données secondaires est inférieur à un premier pourcentage prédéfini du débit de transmission par l'émetteur des données utiles et diminuer le budget secondaire de la valeur de l'augmentation du budget utile ;

augmenter (733) le budget utile en fixant la valeur du budget utile à la somme du budget secondaire et d'une valeur représentative du débit de réception par le récepteur des données utiles et secondaires transmises par l'émetteur.

3. Procédé selon la revendication 1 ou 2 **caractérisé en ce que**, dans le premier mode, lorsqu'au moins une des informations représentatives de la transmission indique qu'une augmentation d'un budget secondaire doit être appliquée (73), le procédé comprend :

augmenter (741, 745) le budget secondaire d'une première valeur d'augmentation prédéfinie.

4. Procédé selon la revendication 1, 2 ou 3 **caractérisé en ce que**, dans un deuxième mode, lorsqu'au moins une des informations représentatives de la transmission indique qu'une augmentation du budget utile est possible, le procédé comprend :

lorsqu'une des informations représentatives de la transmission indique (734) qu'un débit de réception du récepteur atteint un troisième pourcentage prédéfini du maximum de débit disponible sur le réseau, allouer (736) respectivement au budget utile et au budget secondaire un quatrième et un cinquième pourcentages prédéfinis du débit de réception, une somme du budget utile et du budget secondaire étant égale audit débit de réception, le budget utile étant supérieur au budget secondaire ;

lorsqu'une des informations représentatives de la transmission indique (734) que ledit débit de réception est inférieur au troisième pourcentage prédéfini du maximum de débit disponible sur le réseau, mettre (735) le budget secondaire à zéro, allouer au budget utile un sixième pourcentage prédéfini dudit maximum et diminuer ledit maximum d'un septième pourcentage prédéfini.

5. Procédé selon l'une quelconque des revendications précédentes **caractérisé en ce que**, dans un deuxième mode, lorsqu'au moins une des informations représentatives de la transmission indique qu'une augmentation du budget secondaire doit être appliquée, le procédé comprend :

calculer (742, 743, 744) une valeur d'augmentation en multipliant une deuxième valeur d'augmentation prédéfinie inférieure à la première valeur d'augmentation prédéfinie par un coefficient compris entre zéro et l'unité, ledit coefficient étant calculé à partir d'une information représentative d'une fenêtre temporelle et d'informations dépendantes du temps d'aller observées par le récepteur et transmises dans les informations représentatives de la transmission à l'émetteur ; et ;

augmenter (745) le budget secondaire de la valeur d'augmentation calculée.

6. Procédé selon l'une quelconque des revendications précédentes **caractérisé en ce que**, lorsqu'au moins une des informations représentatives de la transmission indique qu'aucune augmentation du débit de transmission n'est possible, le procédé comprend :

appliquer une procédure de vérification du taux de pertes de paquets et réduire le débit de transmission si le taux de pertes est supérieur à un seuil de pertes prédéfini (760, 761, 762);

si le taux de perte est inférieur au seuil de pertes prédéfini, appliquer une procédure de vérification du délai d'aller (780, 781, 783) et réduire le débit de transmission lorsqu'un écart entre le délai d'aller et une valeur de délai d'aller de référence est supérieur à un écart prédéfini.

7. Procédé de régulation de débit entre un émetteur et un récepteur reliés par une pluralité de liens réseau lors d'une transmission de données audio/vidéo, **caractérisé en ce que** le procédé comprend :

former une liste de liens ordonnés ;

parcourir les liens selon l'ordre de la liste ;

pour chaque lien :

définir un budget de données à transmettre par ledit lien, dit lien courant, en utilisant des informations fournies pour le lien courant par le procédé de régulation de débit selon l'une quelconque des revendications 1 à 6 ; et, transmettre une quantité de données correspondant audit budget ;

passer au lien suivant lorsque la quantité de données correspondant audit budget a été transmise en reprenant la liste au début lorsque tous les liens de la liste ont été parcourus.

8. Procédé selon la revendication 7, **caractérisé en ce que** la liste est ordonnée suivant une métrique de performance calculée pour chaque lien de la pluralité de liens, pour un lien, ladite métrique étant une fonction croissante du budget de données à transmettre par ledit lien, une fonction décroissante d'une information représentative d'un taux de pertes de paquets sur ledit lien, et une fonction croissante d'une différence entre une taille de fenêtre de congestion des liens et d'une information représentative d'un temps d'aller mesuré pour ledit lien.

9. Procédé selon la revendication 8, **caractérisé en ce que** la métrique de performance pour un lien réseau i de la pluralité de liens se calcule de la manière suivante :

$$Q_i = \frac{(B\_data_i + B\_sec_i)^2}{(P_c^i)^2 \times TD} \times \left(\frac{timewindow}{3} - owd_i\right)$$

où $B_{data_i}$ est le budget utile pour le lien réseau i, $B_{sec_i}$ est le budget secondaire pour le lien réseau i, la somme dudit budget utile et dudit budget secondaire étant le budget de données à transmettre par le lien réseau i, $P_c^i$ est une information représentative d'un taux de pertes de paquets pour le lien réseau i, TD est une somme de budget secondaire pour tous les liens réseau de ladite pluralité, timewindow est une latence maximale admissible entre l'émetteur et le récepteur, et $owd_i$ est l'information représentative d'un délai d'aller mesuré pour le lien réseau i.

10. Procédé selon la revendication 8 ou 9, **caractérisé en ce que** lorsque l'émetteur se retrouve sans données à transmettre après une transmission d'un paquet, le prochain lien utilisé pour transmettre un paquet est le premier de la liste, la liste étant ensuite parcourue en repartant du premier lien de la liste.

11. Dispositif de régulation de débit lors d'une transmission de données audio/vidéo sur un lien réseau entre un émetteur et un récepteur, **caractérisé en ce qu'**il comprend des moyens adaptés pour mettre en œuvre le procédé selon les revendications 1 à 6.

12. Dispositif de régulation de débit entre un émetteur et un récepteur reliés par une pluralité de liens réseau lors d'une transmission de données audio/vidéo, **caractérisé en ce qu'**il comprend des moyens adaptés pour mettre en œuvre le procédé selon les revendications 7 à 10.

13. Système de transmission de données audio/vidéo comprenant un émetteur comprenant un dispositif selon la revendication 11 ou 12 et un récepteur, l'émetteur et le récepteur étant reliés par au moins un lien réseau.

14. Programme d'ordinateur, **caractérisé en ce qu'**il comprend des instructions pour mettre en œuvre, par un dispositif (12), le procédé selon l'une quelconque des revendications 1 à 6 ou le procédé selon l'une quelconque des revendications 7 à 10, lorsque ledit programme est exécuté par un processeur dudit dispositif.

15. Moyens de stockage, **caractérisés en ce qu'**ils stockent un programme d'ordinateur comprenant des instructions pour mettre en œuvre, par un dispositif (12), le procédé selon l'une quelconque des revendications 1 à 6 ou le procédé selon les revendications 7 à 10, lorsque ledit programme est exécuté par un processeur dudit dispositif.

**Patentansprüche**

1. Verfahren zur Durchsatzregelung bei einer Audio/Video-Datenübertragung über eine Netzverbindung zwischen einem Sender und einem Empfänger, wobei das Verfahren beim Empfang, durch den Sender, von für die Übertragung repräsentativen Informationen, die vom Empfänger übertragen wurden, durchgeführt wird, **dadurch gekennzeichnet, dass** das Verfahren durch den Sender durchgeführt wird und umfasst:

eine Vielzahl von Durchsatzregelungsmodi, die einen ersten, beim Start der Übertragung ausgeführten Durchsatzregelungsmodus umfassen, in welchem die einzige mögliche Änderung des Übertragungsdurchsatzes durch den Sender eine Erhöhung ist, wobei jeder Wert der Durchsatzerhöhung ohne Berücksichtigung irgendeiner für die Übertragung repräsentativen Information bestimmt wird, und wenigstens einen zweiten, im Anschluss an den ersten Modus durchgeführten Regelungsmodus, bei dem wenigstens eine der für die Übertragung repräsentativen Informationen verwendet wird, um den Übertragungsdurchsatz zu erhöhen oder zu verringern, wobei ein Übergang von einem ersten Modus zu einem zweiten Modus erfolgt, wenn eine der für die Übertragung repräsentativen Informationen anzeigt, dass der Übertragungsdurchsatz einen auf der Netzverbindung verfügbaren maximalen Durchsatz erreicht hat;
wobei, wenn der Übertragungsdurchsatz zwischen einem Durchsatz-Budget von die Audio/Video-Daten umfassenden Nutzdaten, Nutz-Budget genannt, und einem Durchsatz-Budget von nicht für die Dekodierung der Audio/VideoDaten erforderlichen Sekundärdaten, sekundäres Budget genannt, aufgeteilt ist, nur das sekundäre Budget bei einer Erhöhung des Übertragungsdurchsatzes erhöht wird, während das Nutz-Budget nur erhöht wird, wenn keine für die Übertragung repräsentative Information, die im Anschluss an eine Erhöhung des sekundären Budgets empfangen wird, eine Erhöhung eines Risikos eines Datenverlustes anzeigt.

2. Verfahren nach Anspruch 1, **dadurch gekennzeichnet, dass** im ersten Modus, wenn wenigstens eine der für die Übertragung repräsentativen Informationen anzeigt, dass eine Erhöhung eines Nutz-Budgets möglich ist (72), das Verfahren umfasst:

Erhöhen (732) des Nutz-Budgets um einen zweiten vordefinierten prozentualen Anteil des sekundären Budgets, wenn ein Übertragungsdurchsatz der durch den Sender übertragenen Sekundärdaten kleiner als ein erster vordefinierter prozentualer Anteil des Übertragungsdurchsatzes der durch den Sender übertragenen Nutzdaten ist, und Verringern des sekundären Budgets um den Wert der Erhöhung des Nutz-Budgets;
Erhöhen (733) des Nutz-Budgets durch Festlegen des Wertes des Nutz-Budgets auf die Summe des sekundären Budgets und eines Wertes, der für den Empfangsdurchsatz der durch den Empfänger empfangenen Nutzdaten und Sekundärdaten, die vom Sender übertragen wurden, repräsentativ ist.

3. Verfahren nach Anspruch 1 oder 2, **dadurch gekennzeichnet, dass** im ersten Modus, wenn wenigstens eine der für die Übertragung repräsentativen Informationen anzeigt, dass eine Erhöhung eines sekundären Budgets vorgenommen werden muss (73), das Verfahren umfasst:
Erhöhen (741, 745) des sekundären Budgets um einen ersten vordefinierten Erhöhungswert.

4. Verfahren nach Anspruch 1, 2 oder 3, **dadurch gekennzeichnet, dass** in einem zweiten Modus, wenn wenigstens eine der für die Übertragung repräsentativen Informationen anzeigt, dass eine Erhöhung des Nutz-Budgets möglich ist, das Verfahren umfasst:

wenn eine der für die Übertragung repräsentativen Informationen anzeigt (734), dass ein Empfangsdurchsatz des Empfängers einen dritten vordefinierten prozentualen Anteil des auf dem Netz verfügbaren Durchsatzmaximums erreicht, Zuweisen (736), zu dem Nutz-Budget bzw. zu dem sekundären Budget, eines vierten und eines fünften vordefinierten prozentualen Anteils des Empfangsdurchsatzes, wobei eine Summe des Nutz-Budgets und des sekundären Budgets gleich dem Empfangsdurchsatz ist, wobei das Nutz-Budget größer als das sekundäre Budget ist;
wenn eine der für die Übertragung repräsentativen Informationen anzeigt (734), dass der Empfangsdurchsatz kleiner als der dritte vordefinierte prozentuale Anteil des auf dem Netz verfügbaren Durchsatzmaximums ist, Setzen (735) des sekundären Budgets auf null, Zuweisen eines sechsten vordefinierten prozentualen Anteils dieses Maximums zu dem Nutz-Budget und Verringern des Maximums um einen siebenten vordefinierten prozentualen Anteil.

5. Verfahren nach einem der vorhergehenden Ansprüche, **dadurch gekennzeichnet, dass** in einem zweiten Modus, wenn eine der für die Übertragung repräsentativen Informationen anzeigt, dass eine Erhöhung eines sekundären Budgets vorgenommen werden muss, das Verfahren umfasst:

Berechnen (742, 743, 744) eines Erhöhungswertes durch Multiplizieren eines zweiten vordefinierten Erhöhungswertes, der kleiner als der erste vordefinierte Erhöhungswert ist, mit einem Koeffizienten zwischen null und eins, wobei der Koeffizient aus einer für ein Zeitfenster repräsentativen Information und aus von der Latenz abhängigen Informationen, die vom Empfänger beobachtet und in den für die Übertragung repräsentativen Informationen an den Sender übertragen wurden, berechnet wird; und
Erhöhen (745) des sekundären Budgets um den berechneten Erhöhungswert.

6. Verfahren nach einem der vorhergehenden Ansprüche, **dadurch gekennzeichnet, dass**, wenn wenigstens eine der für die Übertragung repräsentativen Informationen anzeigt, dass keine Erhöhung des Übertragungsdurchsatzes möglich ist, das Verfahren umfasst:

Anwenden einer Prozedur zur Überprüfung der Paketverlustrate und Verringern des Übertragungsdurchsatzes, falls die Verlustrate größer als ein vordefinierter Verlustschwellenwert ist (760, 761, 762); falls die Verlustrate kleiner als der vordefinierte Verlustschwellenwert ist, Anwenden einer Prozedur zur Überprüfung der Latenz (780, 781, 783) und Verringern des Übertragungsdurchsatzes, wenn eine Abweichung zwischen der Latenz und einem Latenz-Referenzwert größer als eine vordefinierte Abweichung ist.

7. Verfahren zur Durchsatzregelung zwischen einem Sender und einem Empfänger, die durch eine Vielzahl von Netzverbindungen verbunden sind, bei einer Audio/Video-Datenübertragung, **dadurch gekennzeichnet, dass** das Verfahren umfasst:

Erstellen einer Liste geordneter Verbindungen;
Durchlaufen der Verbindungen in der Reihenfolge der Liste;
für jede Verbindung:

Definieren eines Budgets von über die Verbindung, aktuelle Verbindung genannt, zu übertragenden Daten unter Verwendung von Informationen, die für die aktuelle Verbindung durch das Verfahren zur Durchsatzregelung nach einem der Ansprüche 1 bis 6 geliefert werden; und
Übertragen einer dem Budget entsprechenden Datenmenge;
Übergehen zur folgenden Verbindung, wenn die dem Budget entsprechende Datenmenge übertragen worden ist, wobei in der Liste wieder von vorn begonnen wird, wenn alle Verbindungen der Liste durchlaufen worden sind.

8. Verfahren nach Anspruch 7, **dadurch gekennzeichnet, dass** die Liste gemäß einer für jede Verbindung der Vielzahl von Verbindungen berechneten Leistungsmetrik geordnet ist, wobei für eine Verbindung die Metrik eine wachsende Funktion des Budgets der über die Verbindung zu übertragenden Daten, eine fallende Funktion einer für eine Paketverlustrate auf der Verbindung repräsentativen Information und eine wachsende Funktion einer Differenz zwischen einer Größe eines Überlastfensters der Verbindungen und einer für eine Latenz, die für die Verbindung gemessen wurde, repräsentativen Information ist.

9. Verfahren nach Anspruch 8, **dadurch gekennzeichnet, dass** die Leistungsmetrik für eine Netzverbindung i der Vielzahl von Verbindungen auf folgende Weise berechnet wird:

$$Q_i \;=\; \frac{(B\_data_i + B\_\sec_i)^2}{(P_c^i)^2 \times TD} \times \left( \frac{timewindow}{3} - owd_i \right),$$

wobei $B_{data_i}$ das Nutz-Budget für die Netzverbindung i ist, $B_{sec_i}$ das sekundäre Budget für die Netzverbindung i ist, wobei die Summe des Nutz-Budgets und des sekundären Budgets das Budget der über die Netzverbindung i zu übertragenden Daten ist, $P_c^i$ eine Information ist, die für eine Paketverlustrate für die Netzverbindung i repräsentativ ist, *TD* eine Summe von sekundären Budgets für alle Netzverbindungen der Vielzahl ist, *timewindow* eine zulässige maximale Latenz zwischen dem Sender und dem Empfänger ist und $owd_i$ die Information ist, die für eine für die Netzverbindung i gemessene Latenz repräsentativ ist.

10. Verfahren nach Anspruch 8 oder 9, **dadurch gekennzeichnet, dass**, wenn der Sender nach einer Übertragung eines Pakets keine zu übertragenden Daten mehr vorliegen hat, die nächste Verbindung, die zum Übertragen eines Pakets verwendet wird, die erste der Liste ist, wobei die Liste anschließend durchlaufen wird, indem wieder bei der ersten Verbindung der Liste begonnen wird.

11. Vorrichtung zur Durchsatzregelung bei einer Audio/Video-Datenübertragung über eine Netzverbindung zwischen einem Sender und einem Empfänger, **dadurch gekennzeichnet, dass** sie Mittel umfasst, die dafür ausgelegt sind, das Verfahren nach den Ansprüchen 1 bis 6 durchzuführen.

12. Vorrichtung zur Durchsatzregelung zwischen einem Sender und einem Empfänger, die durch eine Vielzahl von Netzverbindungen verbunden sind, bei einer Audio/Video-Datenübertragung, **dadurch gekennzeichnet, dass** sie Mittel umfasst, die dafür ausgelegt sind, das Verfahren nach den Ansprüchen 7 bis 10 durchzuführen.

13. System zur Audio/Video-Datenübertragung, welches einen Sender, der eine Vorrichtung nach Anspruch 11 oder 12 umfasst, und einen Empfänger umfasst, wobei der Sender und der Empfänger durch wenigstens eine Netzverbindung verbunden sind.

14. Computerprogramm, **dadurch gekennzeichnet, dass** es Anweisungen zur Durchführung, durch eine Vorrichtung (12), des Verfahrens nach einem der Ansprüche 1 bis 6 oder des Verfahrens nach einem der Ansprüche 7 bis 10, wenn das Programm von einem Prozessor der Vorrichtung ausgeführt wird, umfasst.

15. Speichermittel, **dadurch gekennzeichnet, dass** sie ein Computerprogramm speichern, das Anweisungen zur Durchführung, durch eine Vorrichtung (12), des Verfahrens nach einem der Ansprüche 1 bis 6 oder des Verfahrens nach einem der Ansprüche 7 bis 10, wenn das Programm von einem Prozessor der Vorrichtung ausgeführt wird, umfasst.

**Claims**

1. Method for regulating the bit rate during a transmission of audio/video data over a network link between a transmitter and a receiver, said method being implemented when the transmitter receives items of information representative of the transmission that are transmitted by the receiver, **characterized in that** the method is implemented by the transmitter and comprises:

   a plurality of bit rate regulation modes comprising a first bit rate regulation mode, which is put into effect when the transmission begins and in which the only possible change in the bit rate at which the transmitter transmits is an increase, each value by which the bit rate is increased being determined without taking into account any item of information representative of the transmission, and at least one second regulation mode, which is implemented after the first mode and in which at least one of the items of information representative of the transmission is used to increase or reduce the transmission bit rate, a transition from the first mode to a second mode occurring when one of the items of information representative of the transmission indicates that the transmission bit rate has reached a maximum bit rate available on the network link;
   said transmission bit rate being split between a bit rate budget for payload data comprising the audio/video data, which is known as the payload budget, and a bit rate budget for secondary data that are not needed for decoding the audio/video data, which is known as the secondary budget, only the secondary budget being increased when the transmission bit rate is increased, the payload budget being increased only when no item of information representative of the transmission that is received after an increase in the secondary budget indicates an increased risk of data loss.

2. Method according to Claim 1, **characterized in that**, in the first mode, when at least one of the items of information representative of the transmission indicates that it is possible to increase a payload budget (72), the method comprises:

   increasing (732) the payload budget by a second predefined percentage of the secondary budget when a bit rate at which the transmitter transmits the secondary data is lower than a first predefined percentage of the bit rate at which the transmitter transmits the payload data, and reducing the secondary budget by the value by which the payload budget is increased;
   increasing (733) the payload budget by setting the value of the payload budget to the sum of the secondary budget and of a value representative of the bit rate at which the receiver receives the payload data and secondary data transmitted by the transmitter.

3. Method according to Claim 1 or 2, **characterized in that**, in the first mode, when at least one of the items of information representative of the transmission indicates that an increase has to be made to a secondary budget (73), the method comprises:
   increasing (741, 745) the secondary budget by a first predefined increase value.

4. Method according to Claim 1, 2 or 3, **characterized in that**, in a second mode, when at least one of the items of information representative of the transmission indicates that it is possible to increase the payload budget, the method comprises:

when one of the items of information representative of the transmission indicates (734) that a reception bit rate of the receiver has reached a third predefined percentage of the maximum bit rate available on the network, allocating (736) a fourth predefined percentage and a fifth predefined percentage of the reception bit rate to the payload budget and to the secondary budget, respectively, a sum of the payload budget and of the secondary budget being equal to said reception bit rate, the payload budget being higher than the secondary budget; when one of the items of information representative of the transmission indicates (734) that said reception bit rate is lower than the third predefined percentage of the maximum bit rate available on the network, setting (735) the secondary budget to zero, allocating a sixth predefined percentage of said maximum to the payload budget and reducing said maximum by a seventh predefined percentage.

5. Method according to any one of the preceding claims, **characterized in that**, in a second mode, when at least one of the items of information representative of the transmission indicates that an increase has to be made to the secondary budget, the method comprises:

computing (742, 743, 744) an increase value by multiplying a second predefined increase value that is lower than the first predefined increase value by a coefficient between zero and one, said coefficient being computed on the basis of an item of information representative of a time window and items of information dependent on the one-way delay that are observed by the receiver and transmitted to the transmitter within the items of information representative of the transmission; and increasing (745) the secondary budget by the computed increase value.

6. Method according to any one of the preceding claims, **characterized in that**, when at least one of the items of information representative of the transmission indicates that it is impossible to increase the transmission bit rate, the method comprises:

applying a procedure for checking the packet loss rate and reducing the transmission bit rate if the loss rate is higher than a predefined loss threshold (760, 761, 762) ; if the loss rate is lower than the predefined loss threshold, applying a procedure for checking the one-way delay (780, 781, 783) and reducing the transmission bit rate when a difference between the one-way delay and a reference one-way delay value is above a predefined difference.

7. Method for regulating the bit rate between a transmitter and a receiver that are connected by a plurality of network links during a transmission of audio/video data, **characterized in that** the method comprises:

forming a list of ordered links; running through the links in the order of the list; for each link:

defining a budget of data to be transmitted over said link, which is known as the current link, by using items of information provided for the current link by the bit rate regulation method according to any one of Claims 1 to 6; and transmitting an amount of data corresponding to said budget; moving on to the next link when the amount of data corresponding to said budget has been transmitted, and starting over from the beginning of the list when all the links in the list have been covered.

8. Method according to Claim 7, **characterized in that** the list is ordered in accordance with a performance metric computed for each link of the plurality of links, said metric, for one link, being an increasing function of the budget of data to be transmitted over said link, a decreasing function of an item of information representative of a packet loss rate on said link, and an increasing function of a difference between a congestion window size for the links and an item of information representative of a one-way delay measured for said link.

9. Method according to Claim 8, **characterized in that** the performance metric for a network link $i$ of the plurality of links is computed as follows:

$$Q_i = \frac{(B\_data_i + B\_sec_i)^2}{(P_c^i)^2 \times TD} \times \left(\frac{timewindow}{3} - owd_i\right)$$

where $B_{data_i}$ is the payload budget for the network link $i$, $B_{sec_i}$ is the secondary budget for the network link $i$, the sum of said payload budget and of said secondary budget being the budget of data to be transmitted over the network link $i$, $P_c^i$ is an item of information representative of a packet loss rate for the network link $i$, $TD$ is a sum of the secondary budget for all the network links of said plurality, $timewindow$ is a maximum permissible latency between the transmitter and the receiver, and $owd_i$ is the item of information representative of a one-way delay measured for the network link $i$.

10. Method according to Claim 8 or 9, **characterized in that**, when the transmitter is left without any data to transmit after the transmission of a packet, the next link used to transmit a packet is the first link in the list, the list then being followed starting once again from the first link in the list.

11. Device for regulating the bit rate during a transmission of audio/video data over a network link between a transmitter and a receiver, **characterized in that** it comprises means designed to implement the method according to Claims 1 to 6.

12. Device for regulating the bit rate between a transmitter and a receiver that are connected by a plurality of network links during a transmission of audio/video data, **characterized in that** it comprises means designed to implement the method according to Claims 7 to 10.

13. System for transmitting audio/video data comprising a transmitter, which comprises a device according to Claim 11 or 12, and a receiver, the transmitter and the receiver being connected by at least one network link.

14. Computer program, **characterized in that** it comprises instructions for implementing, by means of a device (12), the method according to any one of Claims 1 to 6 or the method according to any one of Claims 7 to 10 when said program is executed by a processor of said device.

15. Storage means, **characterized in that** they store a computer program comprising instructions for implementing, by means of a device (12), the method according to any one of Claims 1 to 6 or the method according to Claims 7 to 10 when said program is executed by a processor of said device.

Fig. 1

Fig. 2

Fig. 3

**Fig. 4A**

**Fig. 4B**

**Fig. 5**

Fig. 6

Fig. 7

Mode aggressif?  730

oui

non  734

Tx_bitrate_sec < P81* tx_bitrate_data?  731

rx_bitrate> max_bitrate*P84 ?

oui

non

non

oui

B_data=B_data+B_sec*P82

B_sec=B_sec*P83  732

B_sec=0

B_data=rx_f+B_sec  733

B_sec=0

B_data=max_bitrate*P85

max_bitrate=max_bitrate*P86  735

B_data = P87*rx_bitrate

B_sec = P88*rx_bitrate  736

**Fig. 8**

Mode agressif?  740

oui

non

UP_speed = step_UP  741

$UP\_speed = \dfrac{step\_UP * delta}{timewindow}$  742

$OWD\_coef = \dfrac{diff\_OWD^2}{min\_OWD * max\_OWD\_min}$  743

$UP\_speed = OWD\_coef * UP\_speed$  744

B_sec = B_sec + UP_speed  745

**Fig. 9**

760

B_sec > S1?

oui

non

761

B_sec = B_sec*P101

762

B_sec = 0

B_data = B_data*P102

763

max_bitrate >
B_sec +
B_data?

oui

non

764

max_bitrate =
max_bitrate*P103

765

max_bitrate = B_sec +
B_data

Fig. 10

780

diff_OWD < 0

non

oui

781

Rien

782

Percent =
$owd_c(\alpha.\text{min\_OWD})$

783

Percent > β

oui

non

784

Percent < γ

oui

non

785

Percent = β

786

Percent = γ

787

B_sec > S1

oui

non

788

B_sec = (100 − percent)*B_sec

789

B_data = P111* rx_bitrate
B_sec = 0

Fig. 11

Paquets perdus — 1200

oui → Coeff_N=Coeff_N – 0.02 — 1201

non → owd trop haut sans pertes — 1205

non → Ne rien faire — 1209

Coeff_N=Coeff_N – 0.02 (1201) → min_OWD > max_OWD_min ? — 1202

oui → Coeff_N = max(Coeff_N, MIN_N_HIGH_LATENCY) — 1203

non → Coeff_N = max(Coeff_N, MIN_N_LOW_LATENCY) — 1204

1203 → 1204

1204 → Pondération — 1208

owd trop haut sans pertes (1205) oui → Coeff_N < MAX_N — 1206

Coeff_N < MAX_N (1206) oui → Coeff_N=Coeff_N + 0.01 — 1207

Coeff_N < MAX_N (1206) non → Pondération — 1208

Coeff_N=Coeff_N + 0.01 (1207) → Pondération — 1208

Fig. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATSUFUJI RYOTA et al.** Multipath TCP path schedulers for streaming video. *IEEE PACIFIC RIM CONFERENCE ON COMMUNICATIONS, COMPUTERS AND SIGNAL PROCESSING (PACRIM),* 21 Août 2017